# EUROPEAN PATENT APPLICATION

(11) **EP 3 955 332 A1**
(43) Date of publication of application: **16.02.2022**
(21) Application number: 20787641.8
(22) Date of filing: 28.02.2020
(51) Int. Cl.: H01M 2/10

(54) **SECONDARY BATTERY CELL STACKING DEVICE AND MANUFACTURING SYSTEM COMPRISING SAME**

(30) Priority: 10.04.2019 US 201962831759 P
(71) Applicant: LG Electronics Inc., SEOUL 07336 (KR)
(72) Inventor: NAM, Heejeong, Seoul 06772 (KR); PARK, Kangil, Seoul 06772 (KR); YOO, Hyeonkyu, Seoul 06772 (KR); OH, Chanyoung, Seoul 06772 (KR)
(74) Representative: Beyer, Andreas
(86) International application number: PCT/KR2020/002926
(87) International publication number: WO 2020/209502

(57) **Abstract**

Disclosed is a secondary battery cell stacking device including a plurality of forks for supporting both ends of each of a plurality of cells to vertically load the cells and arranged in a row in a first horizontal direction, a fork guide rail formed a long way in the first direction to guide the plurality of forks to be moved in the first direction, a stacking reference part positioned at one side of the plurality of forks based on the first direction, a stacking pressurizing unit positioned at a remaining side of the plurality of forks based on the first direction, and a stacking mechanism for moving the stacking pressurizing unit toward the stacking reference part.

## Description

### Field of Invention

The present disclosure relates to a secondary battery cell stacking device and a manufacturing system including the same.

### Background of Invention

In general, a secondary battery is a battery that can be used repeatedly through a discharge process for converting chemical energy into electrical energy and a charging process in a reverse direction, and the types of the secondary battery include a nickel-cadmium (Ni-Cd) battery, a nickel-hydrogen (Ni-MH) battery, a lithium-metal battery, a lithium-ion (Ni-Ion) battery, a lithium-ion polymer battery (hereinafter referred to as "LIPB"), etc.

A secondary battery includes a positive electrode, a negative electrode, an electrolyte, and a separator and stores and generates electricity using a voltage difference between different positive and negative electrode materials. Here, discharging is movement of electrons from a negative electrode with a high voltage to a positive electrode with a low voltage (electricity is generated as much as a voltage difference from the positive electrode), and charging is movement of electrons from the positive electrode to the negative electrode again, and in this case, the positive electrode material receives electrons and lithium ions and returns to an original metal oxide. That is, when the secondary battery is charged, charging current flows as metal atoms move from the positive electrode to the negative electrode through the separator, and in contrast, when the secondary battery is discharged, discharge current flows as the metal atoms move from the negative electrode to the positive electrode.

Lithium secondary batteries are generally classified into liquid electrolyte batteries and polymer electrolyte batteries depending on the type of electrolyte, a battery that uses a liquid electrolyte is called a lithium ion battery, and a battery that uses a polymer electrolyte is called a lithium polymer battery. In addition, an exterior material of the lithium secondary battery may be formed in various types, and typical types of exterior materials include a cylindrical type, a prismatic type, and a pouch.

An electrode assembly in which a positive electrode plate, a negative electrode plate, and a separator interposed therebetween are stacked or wound is provided inside the exterior material of the lithium secondary battery.

In particular, the secondary battery is generally used in the form of a battery module in which at least one unit battery cell (hereinafter, "cell") is stacked.

A conventional secondary battery module manufacturing apparatus uses a method of vertically stacking a plurality of cells in a lying position. However, this method has a problem in that the battery is pushed sideways as a stacking height increases.

That is, in order to make a large-capacity secondary battery, a stacking thickness needs to be increased, and a longitudinal cross-section needs to be rectangular or square. However, there is a problem in that cells are pushed sideways and the longitudinal cross-section of the battery is deformed into a parallelogram shape during a stacking process.

### Summary of Invention

### Technical Problem to be Solved

It is an object of the present disclosure to provide a cell stacking device for stacking cells in a horizontal direction and a manufacturing system of a secondary battery including the cell stacking device.

### Technical Solution

According to an embodiment of the present disclosure, a secondary battery cell stacking device may include a plurality of forks for supporting both ends of each of a plurality of cells to vertically load the cells and arranged in a row in a first direction, the first direction being horizontal, a fork guide rail formed a long way in the first direction to guide the plurality of forks to be moved in the first direction, a stacking reference part positioned at one side of the plurality of forks in the first direction, a stacking pressurizing unit positioned at the other side of the plurality of forks in the first direction, and a stacking mechanism for moving the stacking pressurizing unit toward the stacking reference part.

The secondary battery cell stacking device may further include a plurality of insulating blocks positioned between leads of the plurality of cells to prevent short between the leads and arranged in a row in the first direction, an insulating block guide rail formed a long way to guide the plurality of insulating blocks to be moved in the first direction, an insulating block reference part positioned at one side of the plurality of insulating blocks in the first direction, and an insulating block pressurizing unit moved with the stacking pressurizing unit to pressurize the insulating block toward the insulating block reference part.

The insulating block pressurizing unit may include a pressurizing body for pressurizing the insulating block, and a pressurizing mechanism for moving the pressurizing body in the first direction.

The secondary battery cell stacking device may further include a supporter for supporting a cell block formed by stacking the plurality of cells, the supporter being underthe cell block , and a raising and lowering mechanism for raising the supporter.

The secondary battery cell stacking device may further include a return unit for returning the plurality of forks to an original position if the cell block is unloaded from the supporter.

The return unit may include a first return mechanism for raising and lowering the fork guide rail and the plurality of forks, and a second return mechanism for moving the plurality of forks in the first direction.

The secondary battery cell stacking device may further include a link for connecting the plurality of forks to simultaneously vary intervals between the plurality of forks.

The plurality of fork guide rails may be positioned at different heights, and a pair of forks next to each other may be connected to different fork guide rails.

The plurality of insulating block guide rails may be spaced apart from each other in a second direction orthogonal to the first direction, the second direction is horizontal and a pair of insulating blocks next to each other may be connected to different insulating block guide rails.

The stacking reference part and the stacking pressurizing unit may include a pressurizing body for pressurizing the cell accommodated on the fork, and a pressurizing mechanism for moving the pressurizing body in the first direction.

According to an embodiment of the present disclosure, a manufacturing system of a secondary battery may include a turn unit for vertically rotating a horizontally accommodated cell, a transfer unit for transferring the cell rotated by the turn unit in a vertical state, and a stacking unit for stacking a plurality of cells, transferred by the transfer unit and positioned vertically, in a first direction, the first direction being horizontal. The stacking unit may include a plurality of forks for supporting both ends of each of a plurality of cells to vertically load the cells, a fork guide rail formed a long way in the first direction to guide the plurality of forks to be moved in the first direction, a stacking reference part positioned at one side of the plurality of forks in the first direction, a stacking pressurizing unit positioned at the other side of the plurality of forks in the first direction, and a stacking mechanism for moving the stacking pressurizing unit toward the stacking reference part.

The turn unit may include a rotation jig at which the cell is accommodated in a horizontal state, an adsorption pad provided on the rotation jig and on which the cell is adsorbed, and a rotation mechanism for vertically rotating the rotation jig.

The manufacturing system of the secondary battery may further include a shuttle for accommodating the cell at the rotation jig. The shuttle may include a stage on which the cell is horizontally accommodated, a raising and lowering mechanism for raising and lowering the stage, and a moving mechanism for moving the raising and lowering mechanism and the stage in the first direction.

The manufacturing system of the secondary battery may further include an align mechanism for aligning the cell accommodated at the rotation jig. The align mechanism may include a first align mechanism for aligning the cell in the first direction, and a second align mechanism for aligning the cell in a second direction orthogonal to the first direction, the second direction is horizontal.

The align mechanism may further include an align moving mechanism for moving the second align mechanism in the first direction.

The manufacturing system of the secondary battery may further include a cell block transfer unit for transferring a cell block formed by stacking the plurality of cells by the stacking unit. The cell block transfer unit may include a clamp for gripping the cell block in a full width direction of the cell block, an insulating body for preventing short between leads of the cell block gripped by the clamp and moveable upward and downward, and a position adjusting mechanism for adjusting a position of the insulating body in a full width direction of the cell block.

The manufacturing system of the secondary battery may further include an accommodation jig at which the cell is horizontally accommodated, and a spraying unit for spraying an adhesive material for stacking to an upper surface of the cell accommodated at the accommodation jig. The shuttle may move the cell to which the adhesive material is sprayed to the rotation jig from the accommodation jig.

### Effect of Invention

According to an embodiment of the present disclosure, a plurality of cells that is vertically supported by a fork may be stacked in a horizontal direction. Thus, the cell may be reliably stacked rather than being inclined compared with a method of stacking the cells in a vertical direction.

Short between the plurality of stacked cells may be prevented by a plurality of insulating blocks.

An insulating block pressurizing unit may be moved in a first direction with a stacking pressurizing unit and may also move a pressurizing body in the first direction by a pressurizing mechanism. Thus, the insulating block may be reliably pressurized.

A supporter for supporting a cell block formed by stacking a plurality of cells may be raised by an raising and lowering mechanism. Thus, the cell block may be easily transferred.

When the cells are completely stacked, a plurality of forks may be returned to an original position by a return unit. Thus, it may be possible to continuously stack cells.

The plurality of forks may be connected to each other by links and intervals between the forks may be simultaneously varied. Thus, a plurality of cells may be stacked with uniform pressure.

A stacking reference part and a stacking pressurizing unit may approach each other in the first direction, and a pressurizing body may be moved in the first direction by a pressurizing mechanism. Thus, the cells may be reliably pressurized.

A transfer unit may transfer a cell that is rotated vertically by the turn unit to a stacking unit. Thus, the cells may be easily loaded vertically.

The turn unit may rotate a rotation jig in the state in which a cell that is horizontally placed on a rotation jig is adsorbed by an adsorption pad. Thus, the cell may be vertically rotated rather than falling down from the rotation jig.

The cell may be reliably placed on the rotation jig by a shuttle.

The cell placed on the rotation jig may be aligned by an align mechanism, thereby improving the reliability of a manufacturing process.

A cell block transfer unit may include an insulating body. Thus, while a cell block is transferred, short between leads may be prevented by an insulating body.

In addition, a spray unit may spray an adhesive material to an upper surface of the cell placed on the accommodation jig. Thus, a system may be simplified compared with a conventional a double-sided tape method.

### Brief Description of Drawings

FIG. 1 is a plan view of a manufacturing system of a secondary battery according to an embodiment of the present disclosure.
FIG. 2 is a flowchart showing a simple manufacturing sequence of a manufacturing system of a secondary battery according to an embodiment of the present disclosure.
FIG. 3 is a perspective view of a supply unit according to an embodiment of the present disclosure.
FIG. 4 is a perspective view of a first transfer unit according to an embodiment of the present disclosure.
FIG. 5 is a perspective view of a main unit according to an embodiment of the present disclosure.
FIG. 6 is a diagram for explaining a shuttle according to an embodiment of the present disclosure.
FIG. 7 is a diagram for explaining an align mechanism according to an embodiment of the present disclosure.
FIG. 8 is a diagram for explaining a turn unit according to an embodiment of the present disclosure.
FIG. 9 is a perspective view of a spray unit according to an embodiment of the present disclosure.
FIG. 10 is a perspective view of a second transfer unit according to an embodiment of the present disclosure.
FIG. 11 is an enlarged view of a clamp shown in FIG. 10.
FIG. 12 is a perspective view of a stacking unit according to an embodiment of the present disclosure.
FIG. 13 is a diagram showing the state in which a plurality of cells is loaded in a stacking unit according to an embodiment of the present disclosure.
FIG. 14 is a diagram for explaining movement of a fork according to an embodiment of the present disclosure.
FIG. 15 is a diagram for explaining movement of an insulating block according to an embodiment of the present disclosure.
FIG. 16 is a perspective view of an raising and lowering mechanism according to an embodiment of the present disclosure.
FIG. 17 is a perspective view of a return unit according to an embodiment of the present disclosure.
FIG. 18 is a perspective view of a sensor unit according to an embodiment of the present disclosure.
FIG. 19 is a diagram for explaining an operation of a stacking unit according to an embodiment of the present disclosure.
FIG. 20 is a perspective view of a third transfer unit according to an embodiment of the present disclosure.
FIG. 21 is an enlarged view of a clamp shown in FIG. 20.
FIG. 22 is a diagram of the clamp shown in FIG. 21 viewed in a horizontal direction.
FIG. 23 is a perspective view of a bus bar assembly unit according to an embodiment of the present disclosure.
FIG. 24 is a diagram for explaining a clamping unit and a sub clamping unit according to an embodiment of the present disclosure.
FIG. 25 is a diagram for explaining a bus bar supply unit according to an embodiment of the present disclosure.
FIG. 26 is a diagram for explaining a scanner and an insulating unit according to an embodiment of the present disclosure.
FIG. 27 is a diagram for explaining an inspection unit according to an embodiment of the present disclosure.

### Best Mode

Hereinafter, exemplary embodiments of the present disclosure will be described in detail with reference to the accompanying drawings.

It will be understood that when one element is referred to as being "connected to", "coupled to", or "access" another element, it means that two elements are directly connected or coupled, or a third element exists between the two elements and two elements are connected or coupled by the third element. On the other hand, when it is described that one element is "directly connected" or "directly coupled" to another element, it may be understood that a third element does not exist between the two elements.

In addition, with respect to the components described below, the suffixes "device" and "unit" are described in consideration of ease of description and do not have different meanings. Thus, the suffixes "device" and "unit" may be used interchangeably.

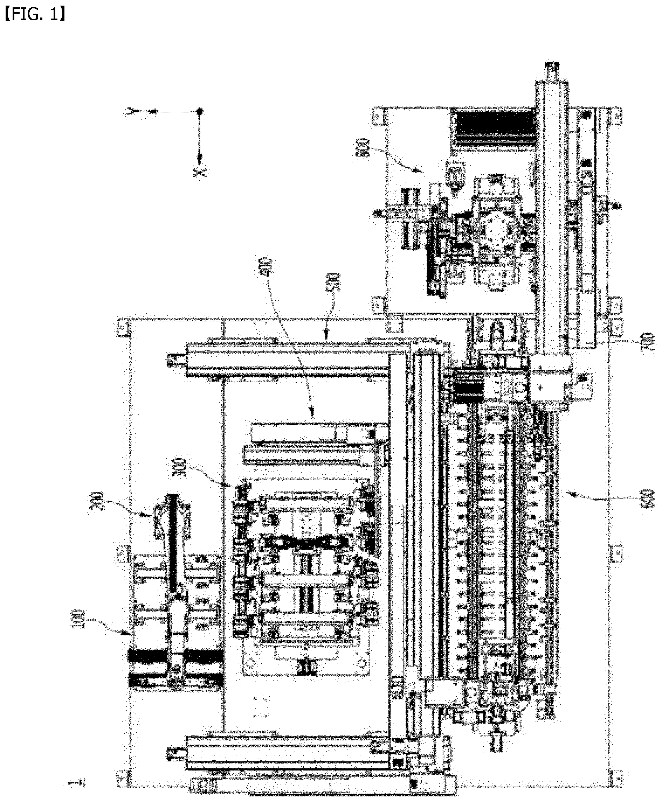

FIG. 1 is a plan view of a manufacturing system of a secondary battery according to an embodiment of the present disclosure.

A first direction and a second direction used in this specification may be a horizontal direction. The first direction may refer to a direction parallel to the x-axis shown in FIG. 1, and the second direction may refer to both directions parallel to the y-axis shown in FIG. 1. That is, the first direction and the second direction may be orthogonal to each other. For example, the first direction may be a front-rear direction and the second direction may be a left-right direction. Hereinafter, for convenience of description, the "first direction" is denoted as "x", and the "second direction" is denoted as "y".

A manufacturing system 1 of the secondary battery (hereinafter referred to as a "manufacturing system") according to an embodiment of the present disclosure may include a supply unit 100, a first transfer unit 200, a main unit 300, a spray unit 400, a second transfer unit 500, a stacking unit 600, a third transfer unit 700, and a bus bar assembly unit 800.

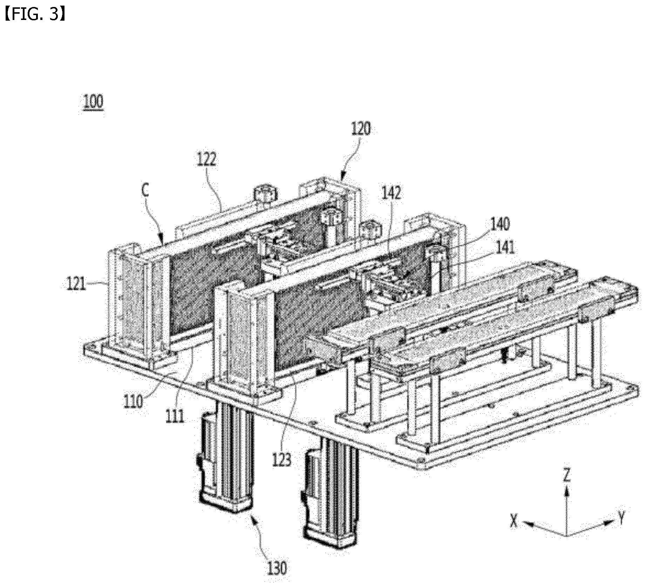

The supply unit 100 may be a device that receives a cell manually or automatically. A cell supplied to the supply unit 100 may include a pad. The supply unit 100 may be a device in which a cell supplied to the main unit 300 is on standby. The supply unit 100 will be described below in detail with reference to FIG. 3.

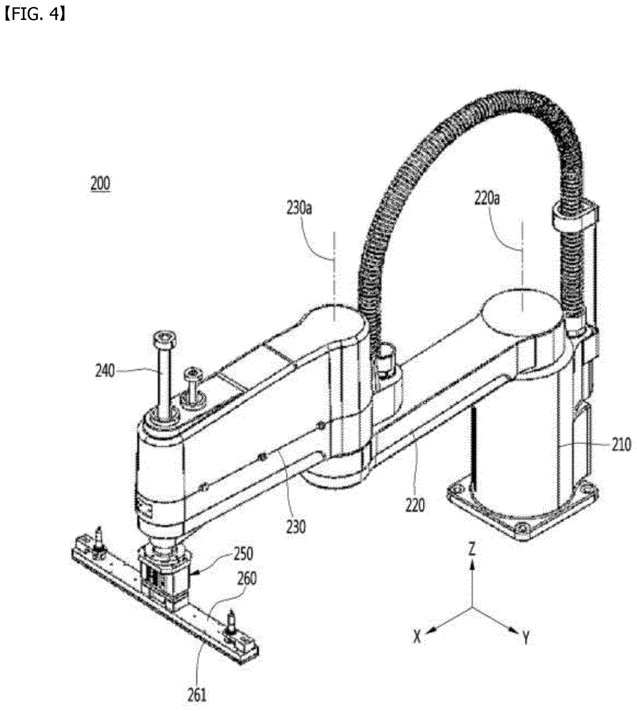

The first transfer unit 200 may be a device for transferring a cell of the supply unit 100 to the main unit 300. The first transfer unit 200 will be described below in detail with reference to FIG. 4.

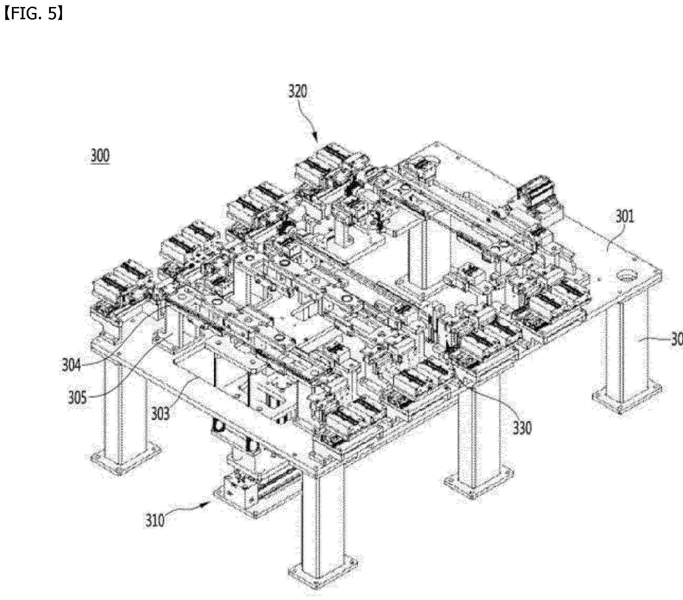

The main unit 300 may be a device for loading a cell and vertically rotating the cell. The main unit 300 will be described below in detail with reference to FIGS. 5 to 8.

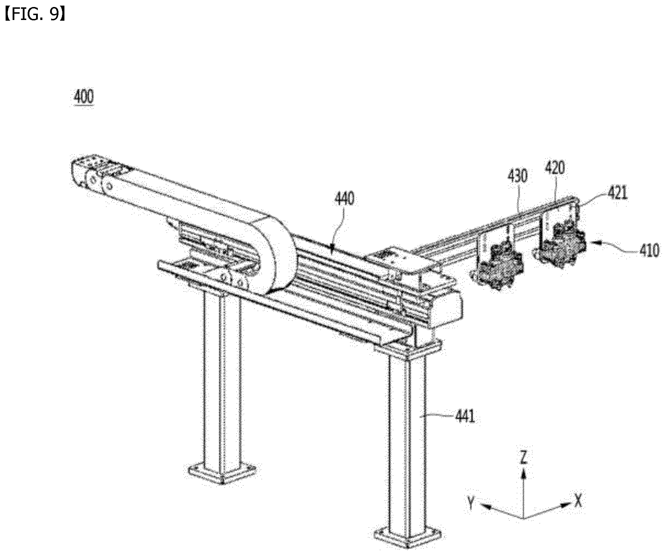

The spray unit 400 may be a device for spraying a predetermined material onto an upper surface of the loaded cell. The spray unit 400 will be described below in detail with reference to FIG. 9.

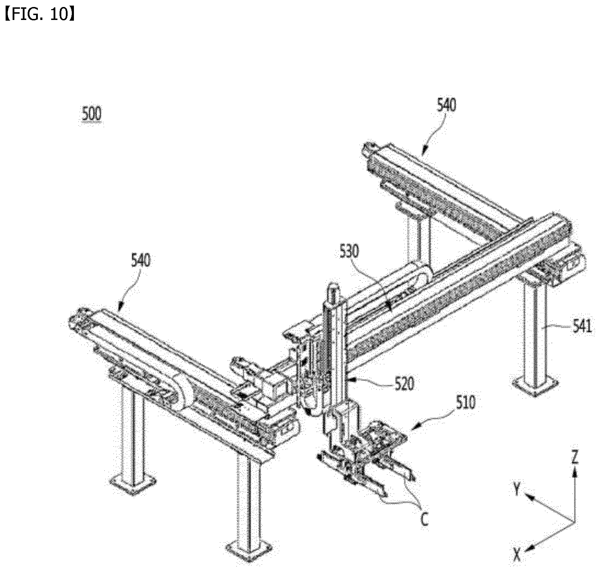

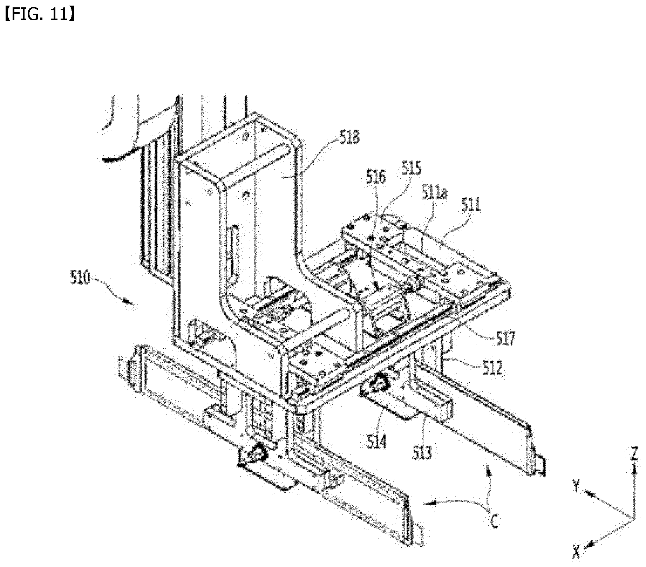

The second transfer unit 500 may be a device for transferring the cell, which is vertically rotated by the main unit 300, to the stacking unit 600. The second transfer unit 500 will be described below in detail with reference to FIGS. 10 and 11.

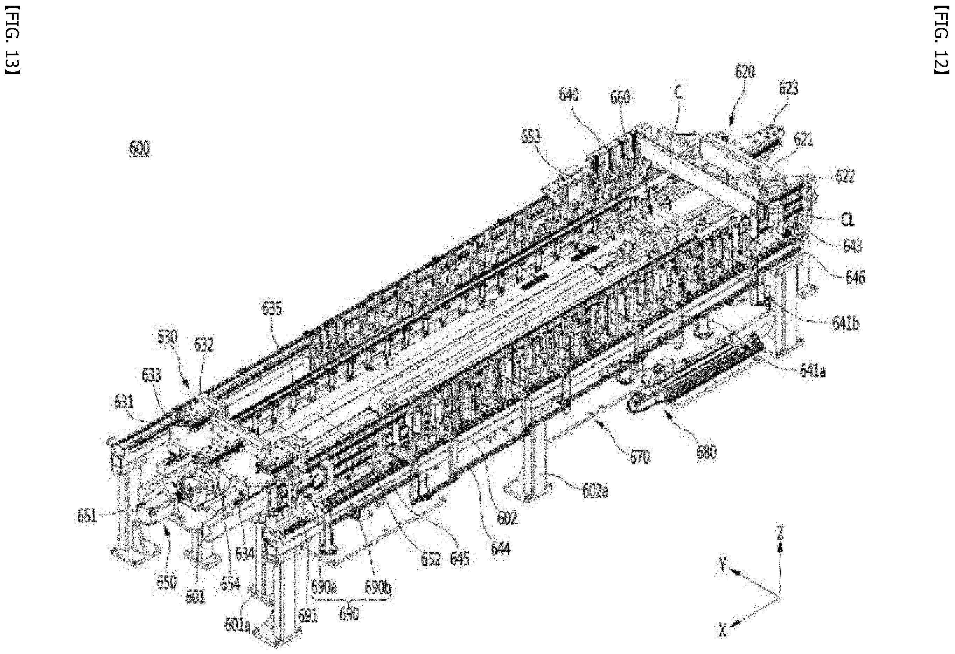

The stacking unit 600 may be a device for forming a cell block by horizontally stacking a plurality of cells that is vertically loaded. The stacking unit 600 will be described below in detail with reference to FIGS. 12 to 19.

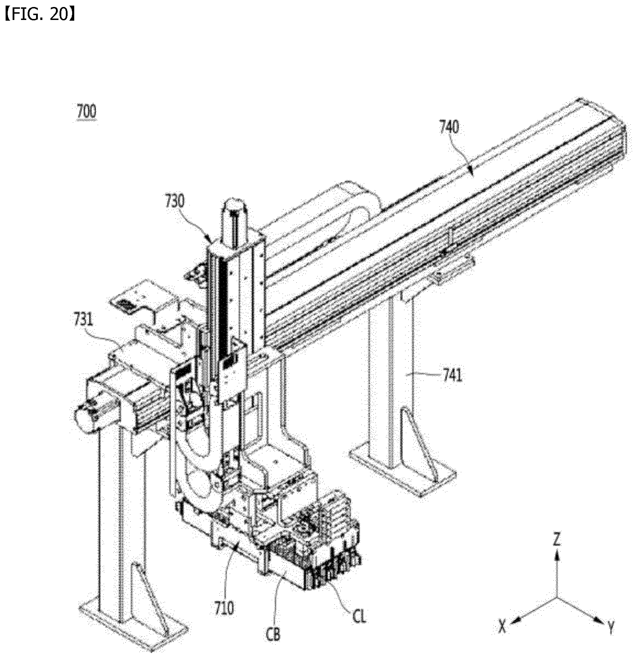

The third transfer unit 700 may be a device for transferring the cell block formed in the stacking unit 600 to the bus bar assembly unit 800. The third transfer unit 700 may be referred to as a cell block transfer unit. The third transfer unit 700 will be described below in detail with reference to FIGS. 20 to 22.

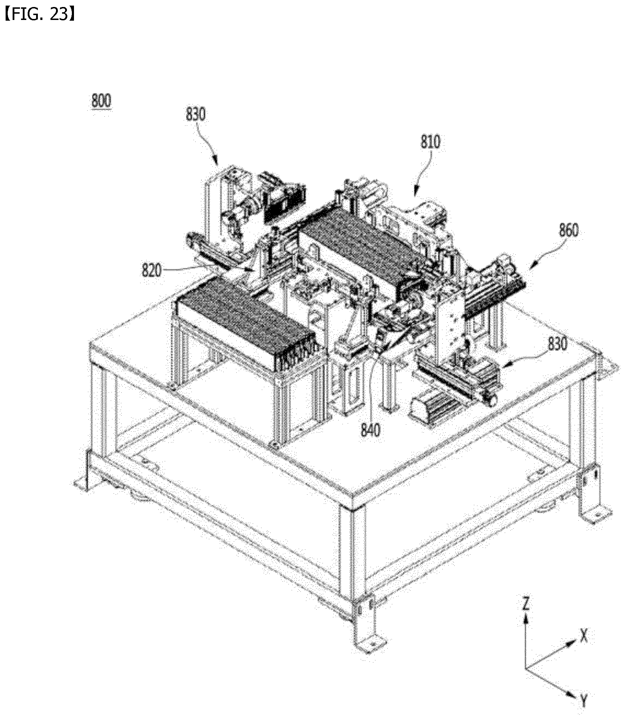

The bus bar assembly unit 800 may be a device for assembling a bus bar to the cell block. The bus bar assembly unit 800 will be described below in detail with reference to FIGS. 23 to 27.

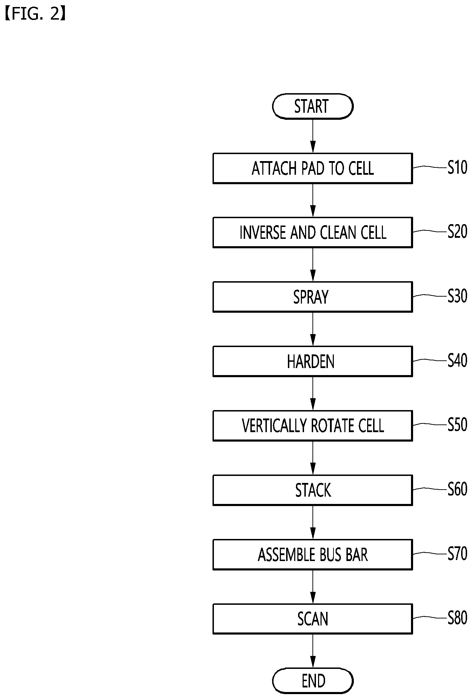

FIG. 2 is a flowchart showing a simple manufacturing sequence of a manufacturing system of a secondary battery according to an embodiment of the present disclosure.

The manufacturing sequence according to the present embodiment may include an operation of attaching a pad to a cell (S10). In more detail, an adhesive material may be sprayed and hardened on one surface of the pad, and the pad may be attached to the cell.

The manufacturing sequence may include a cell inversion and cleaning operation (S20). In more detail, the cell including the pad may be inverted and cleaned. The cell on which the cell inversion and cleaning operation (S20) is completely performed may be supplied to the supply unit 100. Alternatively, the supply unit 100 may perform the cell inversion and cleaning operation (S20).

The manufacturing sequence may include a spraying operation (S30) and a hardening operation (S40). In more detail, an adhesive material for cell-to-cell adhesion (e.g., hot-melt, water-based resin, or UV LED curing type) may be coated and hardened on the cell using a spray method. Accordingly, it may be possible to rapidly perform the operation compared with a method of attaching a double-sided tape to the cell.

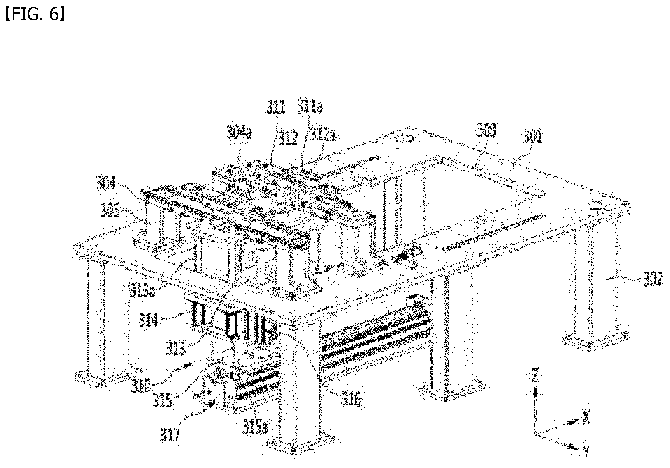

The spraying operation (S30) and the hardening operation (S40) may be performed by the main unit 300 and the spray unit 400. In more detail, the spray unit 400 may spray a predetermined material to the cell accommodated at an accommodation jig 304 (refer to FIG. 6) of the main unit 300, which will be described below in detail.

The manufacturing sequence may include an operation of vertically rotating the cell (S50). In more detail, the cell that is horizontally accommodated may be positioned upright to make both sides of the cell face horizontally.

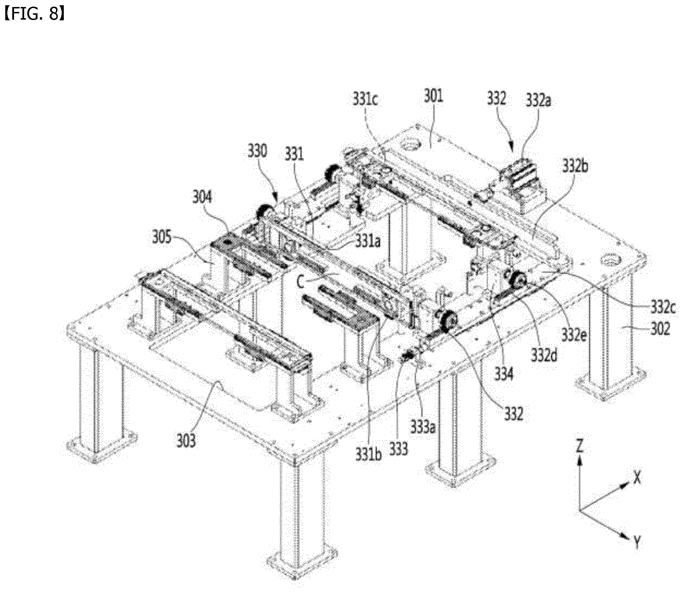

The operation of vertically rotating the cell (S50) may be performed by a turn unit 330 (refer to FIG. 8) included in the main unit 300. In more detail, a rotation mechanism 332 may vertically rotate a rotation jig 331 at which the cell is accommodated, which will be described below in detail.

The manufacturing sequence may include a stacking operation S60. In more detail, the plurality of cells may be horizontally stacked in the state of being positioned upright.

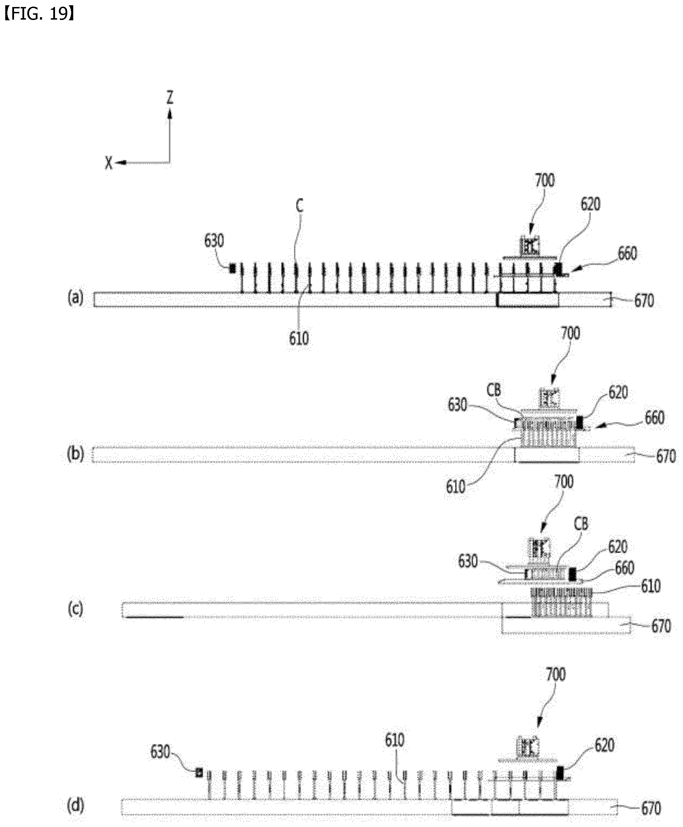

The stacking operation S60 may be performed by the stacking unit 600. In more detail, a plurality of cells that is vertically accommodated at a plurality of forks 610 (refer to FIG. 19) may be horizontally pressurized and stacked between a stacking reference part 620 and a stacking pressurizing unit 630, which will be described below in detail.

The manufacturing sequence may include a bus bar assembling operation S70 and a scanning operation S80. In more detail, a bus bar may be assembled to both ends of the cell block formed by stacking the plurality of cells, and stacking tolerance for in a full width direction of the cell block may be scanned and measured.

The bus bar assembling operation S70 and the scanning operation S80 may be performed by the bus bar assembly unit 800, which will be descried below in detail.

FIG. 3 is a perspective view of a supply unit according to an embodiment of the present disclosure.

The supply unit 100 according to an embodiment of the present disclosure may include a base plate 110, an accommodation unit 120, an raising and lowering mechanism 130, and an align mechanism 140.

The base plate 110 may be horizontally disposed. The accommodation unit 120 may be disposed on an upper surface of the base plate 110. The accommodation unit 120 may be provided in at least one.

The accommodation unit 120 may accommodate at least one cell C therein. A plurality of cells C may be vertically stacked and accommodated in the accommodation unit 120. Each cell C may be accommodated in the accommodation unit 120 in a state of being longitudinally and horizontally disposed in the second direction y.

The accommodation unit 120 may include a pair of confinement units 121 that are spaced apart from each other, a support unit 122 for supporting the cell in a horizontal direction, and a support plate 123 for supporting the cell C from the below.

The pair of confinement units 121 may be spaced apart from each other in the second direction y. Each of the confinement units 121 may confine an end of the cell C in a horizontal direction. However, the confinement unit may be formed to have predetermined tolerance rather than completely confining the cell C.

A horizontal cross section of each confinement unit 121 may have a "C" shape. Since the confinement unit 121 is open upwards, the cell C may be discharged from an upper side of the confinement unit 121.

The support unit 122 may be vertically disposed and may be formed to have a predetermined length in the second direction y. The support unit 122 may face a part between the pair of confinement units 121. The support unit 122 may support the cell C in the first direction x. The align mechanism 140 to be described below may pressurize the cell C toward the support unit 122.

The support plate 123 may support the cell C from the below. The support plate 123 may be positioned between the pair of confinement units 121. Like the cell C, the support plate 123 may be formed a long way vertically and may be horizontally disposed.

An opening 111 through which the support plate 123 passes may be formed in the base plate 110. The raising and lowering mechanism 130 to be described below may raise and lower the support plate 123 through the opening 111.

The raising and lowering mechanism 130 may raise and lower the cell C accommodated in the accommodation unit 120. In more detail, the raising and lowering mechanism 130 may raise and lower the support plate 123 from the below. That is, the raising and lowering mechanism 130 may be positioned below the base plate 110.

The raising and lowering mechanism 130 may include an actuator (e.g., a servo motor) and a connection mechanism (e.g., 1-axis Cartesian coordinate robot) connected to the support plate 123.

The align mechanism 140 may align the cell C accommodated in the accommodation unit 120. In more detail, the align mechanism 140 may align the cell C positioned at the uppermost end among the plurality of cells C stacked in the accommodation unit 120.

The align mechanism 140 may be positioned at an opposite side to the support unit 122 based on the first direction x. The align mechanism 140 may pressurize the cell C accommodated in the accommodation unit 120 toward the support unit, and thus the cell C may be aligned along the support unit 122.

In more detail, the align mechanism 140 may include an actuator 140 such as a driving cylinder, a mounter 141 on which the actuator 140 is mounted, and a pressurizing body 142 connected to the actuator 140 and moved in the first direction x.

The mounter 141 may be disposed above the base plate 110. The actuator 140 may be mounted on the mounter 141 and may move the pressurizing body 142 in the first direction x. The pressurizing body 142 may be formed a long way in the second direction y that is a longitudinal direction of the cell C.

The raising and lowering mechanism 130 may adjust the height of the cell C positioned at the uppermost end. In addition, the cell C positioned at the uppermost end may be aligned by the align mechanism 140. Thus, the first transfer unit 200 (refer to FIG. 1) may reliably transfer the cell C positioned at the uppermost end.

FIG. 4 is a perspective view of a first transfer unit according to an embodiment of the present disclosure.

The first transfer unit 200 may transfer the cell C positioned at the uppermost end to the main unit 300 (refer to FIG. 1) among the cells C stacked in the accommodation unit 120 of the supply unit 100.

The first transfer unit 200 may be a SCARA robot.

In more detail, the first transfer unit 200 may include a base 210, a first arm 220 connected to the base 210 and rotating around a vertical axis 220a, a second arm 230 connected to the first arm 220 and rotating around a vertical axis 230a, an raising and lowering bar 240 connected to the second arm 230 and moved up and down, an actuator 250 for raising and lowering the raising and lowering bar 240, and an adsorption body 260 that is connected to a lower end of the raising and lowering bar 240 and is raised and lowered with the raising and lowering bar 240.

The actuator 250 may be a driving cylinder. The actuator 250 may assist in formation of vacuum pressure for adsorbing the cell C by the adsorption body 260.

The adsorption body 260 may be formed a long way in the second direction y. An adsorption plate 261 for adsorbing the cell C may be provided on a lower surface of the adsorption body 260.

From the above configuration, those skilled in the art to which the present disclosure pertains may easily understand an operation of the first transfer unit 200.

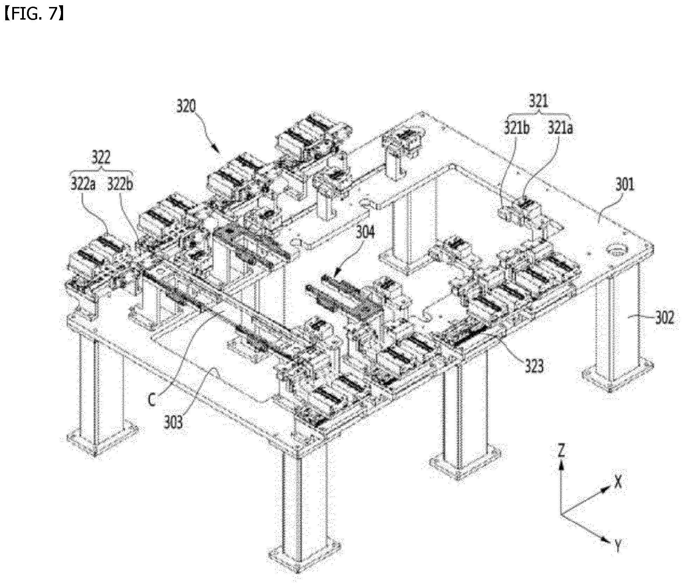

FIG. 5 is a perspective view of a main unit according to an embodiment of the present disclosure. FIG. 6 is a diagram for explaining a shuttle according to an embodiment of the present disclosure. FIG. 7 is a diagram for explaining an align mechanism according to an embodiment of the present disclosure. FIG. 8 is a diagram for explaining a turn unit according to an embodiment of the present disclosure.

The main unit 300 may include a base plate 301, a leg 302, the accommodation jig 304, a shuttle 310, an align mechanism 320, and the turn unit 330.

The base plate 301 may be formed horizontally. The base plate 301 may be supported by the leg 302. An opening 303 through which the shuttle 310 passes may be formed in the base plate 301.

The accommodation jig 304 may be positioned above the base plate 301. The accommodation jig 304 may be formed a long way in the second direction y.

In more detail, at least a portion of the accommodation jig 304 may be positioned above the opening 303. The accommodation jig 304 may be supported by a jig supporter 305 coupled to an upper surface of the base plate 301. The jig supporter 305 may support an external end of the accommodation jig 304.

An opening 304a (refer to FIG. 6) through which a stage 311(refer to FIG. 6) to be described below passes upward and downward may be formed in the accommodation jig 304. The opening 304a may have a shape and a size to preventing the cell C from passing.

The accommodation jig 304 may include a pair of jig bodies that are spaced apart from each other in the second direction y. The jig body may have a shape "C". The opening 304a may include an inner circumference of each jig body and a gap between the pair of jig bodies.

The plurality of accommodation jigs 304 spaced apart from each other in parallel to the first direction x may be provided. For example, the main unit 300 may include a pair of accommodation jigs 304.

The shuttle 310 may accommodate the cell C transferred by the first transfer unit 200 at the accommodation jig 304. The shuttle 310 may move the cell C accommodated at the accommodation jig 304 to the rotation jig 331 (refer to FIG. 8) of the turn unit 330.

The align mechanism 320 may align the cell C accommodate at the accommodation jig 304 or the rotation jig 331 of the turn unit 330.

The turn unit 330 may rotate the cell C to a vertical state from a horizontal state.

Hereinafter, the shuttle 310 will be described in detail with reference to FIG. 6.

The shuttle 310 may include the stage 311 for accommodating the cell C thereon, a raising and lowering mechanism 316 for raising and lowering the stage 311, and a moving mechanism 317 for transferring the stage 311 in the first direction x.

The shuttle 310 may further include a first plate 312 positioned below the stage 311, a second plate 313 positioned below the first plate 312, and a third plate 315 positioned below the second plate 313. The first plate 312, the second plate 313, and the third plate 315 may be horizontally disposed and may be spaced apart from one another in upward and downward directions.

The stage 311 may be formed a long way horizontally in the second direction y and the cell C may be accommodated on an upper surface of the stage 311. A flange 311a for preventing the cell C from deviating may be provided at an edge of the stage 311. The flange 311a may be stepped upward from the upper surface of the stage 311.

At least one stage 311 may be formed. For example, a pair of stages 311 may be spaced apart from each other in parallel to the first direction x.

The stage 311 may be supported by a stage supporter 312a coupled to the upper surface of the first plate 312.

The raising and lowering mechanism 316 may raise and lower the first plate 312 with respect to the second plate 313.

The raising and lowering mechanism 316 may include an actuator (e.g., a driving cylinder), and a connecting rod for connecting the actuator and the first plate 312 to each other. The connecting rod may be connected to a lower surface of the first plate 312 using a floating joint. The actuator may be coupled to the lower surface of the second plate 313, and a hole through which the connecting rod passes may be formed in the second plate 313.

The first plate 312 and the second plate 313 may be connected by a plurality of shafts 313a and a plurality of bushes 314. The shaft 313a may extend vertically. The bush 314 may be fixed to the lower surface of the second plate 313, and the shaft 313a may be connected to the bush 314 through the second plate 313. The shaft 313a may be raised and lowered with respect to the bush 314, and the first plate 312 may be raised and lowered with the shaft 313a.

The third plate 315 may be connected to the second plate 313 using a support shaft 315a. The third plate 315 may be positioned below the raising and lowering mechanism 316.

The moving mechanism 317 may transfer the third plate 315 in the first direction x. The moving mechanism 317 may include an actuator (e.g., a rodless cylinder), and a guide rail for guiding movement of the third plate 315.

Hereinafter, an operation of the shuttle 310 will be described.

The first transfer unit 200 may accommodate the cell C on the stage 311 positioned in above the accommodation jig 304. Then, when the stage 311 is lowered through the opening 304a of the accommodation jig 304 by the raising and lowering mechanism 316, the cell C may be accommodated on the upper surface of the accommodation jig 304.

On the other hand, the stage 311 may be raised through the opening 304a from a lower side of the accommodation jig 304 by the raising and lowering mechanism 316. Thus, the cell C accommodated at the accommodation jig 304 may be accommodated on the stage 311. Then, the stage 311 may be moved in the first direction x by the moving mechanism 317. In this case, the stage supporter 312a may pass between a pair of jig bodies included in the accommodation jig 304.

Then, the shuttle 310 may accommodate the cell C at the rotation jig 331 (refer to FIG. 8) in a horizontal state. A method of accommodating the cell C at the rotation jig 331 by the shuttle 310 may be the same as a method of accommodating the cell C at the accommodation jig 304.

Hereinafter, the align mechanism 320 will be described in detail with reference to FIG. 7.

The align mechanism 320 may be disposed above the base plate 301. The align mechanism 320 may align the cell C, which is accommodated long horizontally in the second direction y at the accommodation jig 304 or the rotation jig 331 (refer to FIG. 8).

The align mechanism 320 may include a first align mechanism 321 for aligning the cell C in the first direction x, and a second align mechanism 322 for aligning the cell C in the second direction y. The align mechanism 320 may further include an align moving mechanism 323 for transferring a second align mechanism 322 in the first direction x.

The first align mechanism 321 may include an actuator 321a and a pusher 321b for pushing the cell C while being moved in the first direction x by the actuator 321a. The actuator 321a may be a driving cylinder.

A pair of first align mechanisms 321 may be provided for each of the jigs 304 and 331. The pair of first align mechanisms 321 may be spaced apart from each other in the second direction y. Any one of the pair of the first align mechanisms 321 may align one end of the cell C and the other one may align the other end of the cell C.

The second align mechanism 322 may include an actuator 322a and a pusher 322b for pushing the cell C while being moved in the second direction y by the actuator 322a. The actuator 322a may be a driving cylinder.

Two pairs of second align mechanisms 322 may be provided for each of the jigs 304 and 331. Any one pair of the two pairs of the second align mechanisms 322 may be positioned at one side of the jigs 304 and 331, and the other pair may be positioned at the other side of the jigs 304 and 331.

The align moving mechanism 323 may include an actuator (e.g., a driving cylinder) and a guide rail for guiding movement of the second align mechanism 322 by the actuator.

A pair of align moving mechanisms 323 may be provided for each of the jigs 304 and 331. Any one of the pair of align moving mechanisms 323 may move the pair of second align mechanisms 322 positioned at one side of the jigs 304 and 331 in the first direction and may move the other one may move the pair of second align mechanisms 322 positioned at the other side of the jigs 304 and 331 in the first direction.

The align moving mechanism 323 may switch the second align mechanism 322 for aligning both ends of the cell C. That is, any one of the pair of second align mechanisms 322 positioned at one side of the jigs 304 and 331 may align one end of the cell C, and any one of the pair of second align mechanisms 322 positioned at the other side of the jigs 304 and 331 may align the other end of the cell C.

Hereinafter, the turn unit 330 will be described in detailed with reference to FIG. 8.

The plurality of turn units 330 spaced apart from each other in parallel to the first direction x may be provided. For example, the main unit 300 may include a pair of turn units 330.

The turn unit 330 may include the rotation jig 331, and the rotation mechanism 332 for rotating the rotation jig 331.

The rotation jig 331 may be positioned above the base plate 301. The accommodation jig 304 may be formed a long way in the second direction y. In more detail, at least a portion of the rotation jig 331 may be positioned above the opening 303.

An opening 331a through which the stage 311 (refer to FIG. 6) of the shuttle 310 passes upward and downward may be formed in the rotation jig 331. The opening 331a may have a shape and a size to preventing the cell C from passing.

The rotation jig 331 may include a pair of jig bodies that are spaced apart from each other in the second direction y. The jig body may have a shape "C". The opening 331a may include an inner circumference of each jig body and a gap between the pair of jig bodies.

The rotation jig 331 may be rotated around a rotation shaft of the second direction y by the rotation mechanism 332 to be described below. In more detail, the rotation jig 331 may be rotated between horizontal and vertical states.

A flange 331b for preventing the cell C from deviating may be provided at the rotation jig 331. Based on the state in which the rotation jig 331 is horizontally positioned, the flange 331b may protrude upward from an edge of the rotation jig 331. When the rotation jig 331 is rotated to a vertical state, the flange 331b may be positioned below the cell C to prevent the cell C from falling down from the rotation jig 331 in a vertical state.

The rotation jig 331 may include an adsorption plate 331c for adsorbing the cell C. The adsorption plate 331c may be a vacuum pad. When the rotation jig 331 is in a horizontal state, the adsorption plate 331c may adsorb the cell C from the below. Thus, even if the rotation jig 331 is rotated vertically, the cell C may not deviate from the rotation jig 331 and may be vertically rotated with the rotation jig 331.

The rotation mechanism 332 may vertically rotate the rotation jig 331. The rotation mechanism 332 may be connected to both ends of the rotation jig 331.

The rotation mechanism 332 may include an actuator 332a, a power transfer unit 332b moved in the first direction x by the actuator 332a, a moving body 332c moved with the power transfer unit 332b in the first direction x, a rack 332d coupled to the moving body 332c, and a pinion 332e engaged with the rack 332d and connected to the rotation jig 331.

The actuator 332a may be driving cylinder. The actuator 332a may be installed on the base plate 301.

The power transfer unit 332b may be formed a long way in the second direction y and may be moved in the first direction x. The actuator 332a may be connected to a central portion of the power transfer unit 332b.

The moving body 332c may be shaped like a panel that is formed a long way in the first direction x. A pair of moving bodies 332c may be spaced apart from each other in parallel to the second direction y. The pair of moving bodies 332c may be coupled to both ends of the power transfer unit 332b. That is, the pair of moving bodies 332c may be moved with the power transfer unit 332b in the first direction x.

An extension bar 333 that is formed a long way in the first direction may be connected to the moving body 332c, and the extension bar 333 may be moveably supported by a support 333a mounted on the upper surface of the base plate 301. Thus, the moving body 332c may be maintained in a state being spaced apart from the above of the base plate 301 and may be smoothly moved in the first direction x.

The rack 332d may be formed a long way in the first direction x and may be coupled to the upper surface of the moving body 332c. The pinion 332e may be engaged with the rack 332d above the rack 332d. Thus, when the rack 332d is moved with the moving body 332c in the first direction x, the pinion 332e may be rotated.

The rack 332d coupled to each moving body 332c may be integrally formed or the plurality of racks 332d spaced apart from each other in the first direction x may be spaced.

A pair of pinions 332e may be provided for each rotation jig 331. The pair of pinions 332e may be connected to both ends of the rotation jig 331.

In more detail, a connection body 335 may be coupled to both ends of the rotation jig 331, and a rotation shaft of the pinion 332e may be connected to the connection body 335 through a support 334.

The support 334 may be fixed to an upper surface of the base plate 301. The support 334 may rotatably support the rotation shaft of the pinion 332e.

The connection body 335 may be coupled to the lower surface of the rotation jig 331. The cell C may be vertically rotated by the connection body 335 rather than interfering with the support 334.

Thus, it may be advantageous that the plurality of rotation jigs 331 is simultaneously rotated using a single actuator 332a.

Hereinafter, an operation of the turn unit 330 will be described.

The spray unit 400 (refer to FIG. 9) to be described below may spray a predetermined material to the cell C accommodated at the accommodation jig 304 and the shuttle 310 (refer to FIG. 10) may accommodate the cell C on which the material is completely sprayed at the rotation jig 331 in a horizontal state.

Then, the rotation mechanism 332 may vertically rotate the rotation jig 331. The cell C may be vertically rotated by the flange 331b and the adsorption plate 331c rather than deviating from the rotation jig 331. Thus, the second transfer unit 500 (refer to FIG. 10) to be described may transfer the cell C to a vertical state.

FIG. 9 is a perspective view of a spray unit according to an embodiment of the present disclosure.

The spray unit 400 may spray a predetermine material to an upper surface of the cell C accommodated at the accommodation jig 304 of the main unit 300.

In more detail, the spray unit 400 may include a spray body 410, a mounting plate 420 on which the spray body 410 is mounted, a profile 430 on which the mounting plate 420 is suspended and supported, and a moving mechanism 440 for transferring the profile 430 in the second direction y.

The spray body 410 may spray a predetermined material downward. The spray body 410 may be positioned above the accommodation jig 304 (refer to FIG. 5) of the main unit 300.

The plurality of spray bodies 410 may be provided to correspond to the accommodation jigs 304. For example, a pair of spray bodies 410 may be spaced apart from each other in the first direction x.

The mounting plate 420 may be vertically disposed. The plurality of mounting plates 420 may be provided to correspond to the number of the spray bodies 410.

A long hole 421 that is formed a long way up and down and to which the spray body 410 is to be coupled may be formed in the mounting plate 420. Thus, an operator may easily set a height at which the spray body 410 is installed.

The profile 430 may be formed a long way in the first direction x. The mounting plate 420 may be coupled to the profile 430 by a coupling member (not shown) such as a bolt and a nut.

The operator may set the position of the mounting plate 420 connected to the profile 430 with respect to the first direction x. That is, the operator may easily set a distance between the plurality of spray bodies 410 in the first direction x.

The moving mechanism 440 may be connected to an end of the profile 430 and may move the profile 430 in the second direction y parallel to a longitudinal direction of the cell C.

The moving mechanism 440 may be supported by a leg 441.

The moving mechanism 440 may include an actuator (e.g., a servo motor) and a connection mechanism (e.g., 1-axis Cartesian coordinate robot) connected to the profile 430.

Thus, the spray body 410 may spray a predetermined material to an upper side of the cell C and may be moved with the profile 430 in the second direction y. Thus, the material may be sprayed to the upper surface of the cell C that is accommodated long in the second direction y.

FIG. 10 is a perspective view of a second transfer unit according to an embodiment of the present disclosure. FIG. 11 is an enlarged view of a clamp shown in FIG. 10.

The second transfer unit 500 may transfer the cell C in a state of being vertically adsorbed by the rotation jig 331 (refer to FIG. 8) of the main unit 300, to the stacking unit 600 (refer to FIG. 12).

The second transfer unit 500 may include a clamp 510, and moving mechanisms 520, 530, and 540 for transferring the clamp 510.

For example, the moving mechanisms 520, 530, and 540 may each be a 3-axis Cartesian coordinate robot.

In more detail, the moving mechanisms 520, 530, and 540 may include a raising and lowering mechanism 520 for raising and lowering the clamp 510, a first moving mechanism 530 for transferring the clamp 510 in the first direction x, and a second moving mechanism 540 for transferring the clamp 510 in the second direction y.

The raising and lowering mechanism 520 may include an actuator (e.g., a servo motor) and a connection mechanism (e.g., a z-axis Cartesian coordinate robot) that is connected to the clamp 510 and is formed a long way up and down.

The first moving mechanism 530 may include an actuator (e.g., a servo motor) and a connection mechanism (e.g., an x-axis Cartesian coordinate robot) that is connected to the raising and lowering mechanism 520 and is formed a long way in the first direction x.

The second moving mechanism 540 may include an actuator (e.g., a servo motor) and a connection mechanism (e.g., a y-axis Cartesian coordinate robot) connected to the first moving mechanism 530. The second moving mechanism 540 may be supported by a leg 541.

A pair of second moving mechanisms 540 connected to both sides of the first moving mechanism 530 may be provided.

The clamp 510 may grip at least one cell C in a vertical state.

In more detail, the clamp 510 may include a horizontal panel 511, a fixed clamp body 513 fixed to a lower surface of the horizontal panel 511, a moving clamp body 512 facing the fixed clamp body 513 in the first direction x, and clamping mechanisms 515, 516, and 517 for transferring the moving clamp body 512 in the first direction x.

The horizontal panel 511 may be connected to the raising and lowering mechanism 520 by a connection frame 518 having an appropriate "L" shape.

The cell C may be gripped between the fixed clamp body 513 and the moving clamp body 512. A friction member for stably gripping the cell C without slipping may be provided at respective opposing surfaces of the fixed clamp body 513 and the moving clamp body 512.

At least one the fixed clamp body 513 or the moving clamp body 512 may include a flange 514 for preventing the cell C from falling down. The flange 514 may support a lower end of the cell C in a vertical state.

The fixed clamp body 513 and the moving clamp body 512 may each be provided in plural. In detail, the number of the fixed clamp bodies 513 and the number of the moving clamp bodies 512 may be the same as the number of the rotation jigs 331 (refer to FIG. 8) of the main unit 300. Thus, the clamp 510 may collectively grip the plurality of cells C.

The clamping mechanisms 515, 516, and 517 may grip or release the cell C by adjusting a distance between the fixed clamp body 513 and the moving clamp body 512.

In more detail, the clamping mechanisms 515, 516, and 517 may include a connection body 515 to which the moving clamp body 512 is connected, an actuator 516 for transferring the connection body 515 to the first direction x, and a guide rail 517 for guiding movement of the connection body 515.

The connection body 515 may be disposed above the horizontal panel 511. An opening 511a may be vertically formed through the horizontal panel 511, and the moving clamp body 512 may be connected to the connection body 515 through the opening 511a.

The actuator 516 may be a driving cylinder. The actuator 516 may be installed on an upper surface of the horizontal panel 511.

The guide rail 517 may be installed on the upper surface of the horizontal panel 511. The guide rail 517 may be formed a long way in the first direction x.

A pair of guide rails 517 spaced apart from each other in the second direction y may be provided. The pair of guide rails 517 may be positioned at opposite sides based on the opening 511a. Both sides of the connection body 515 may be connected to the pair of guide rails 517. The actuator 516 may be positioned between the pair of guide rails 517.

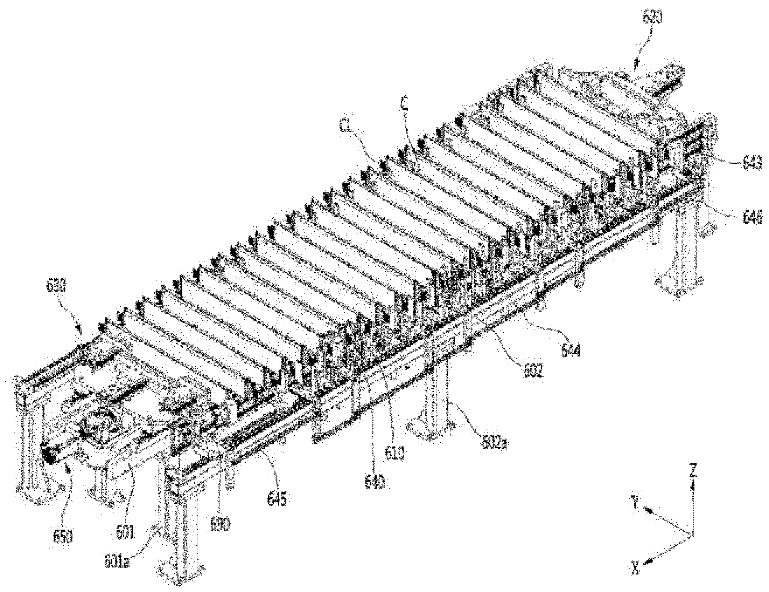

FIG. 12 is a perspective view of a stacking unit according to an embodiment of the present disclosure. FIG. 13 is a diagram showing the state in which a plurality of cells is loaded in a stacking unit according to an embodiment of the present disclosure.

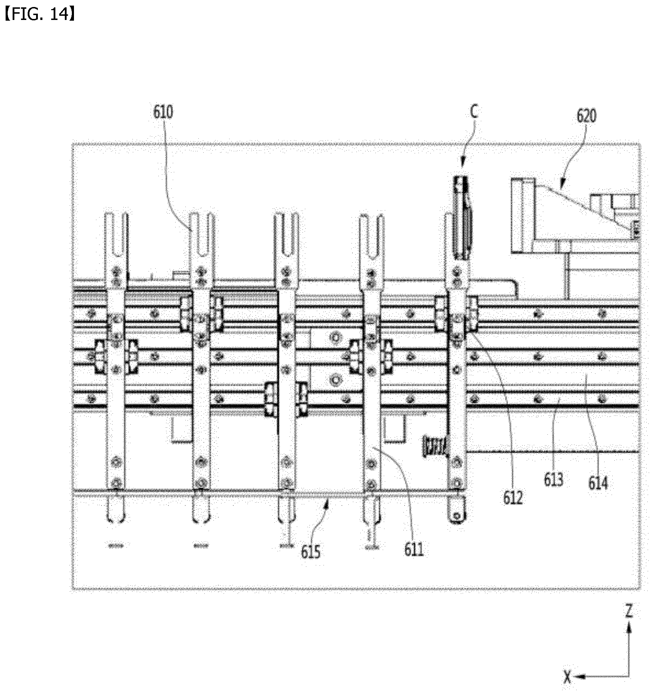

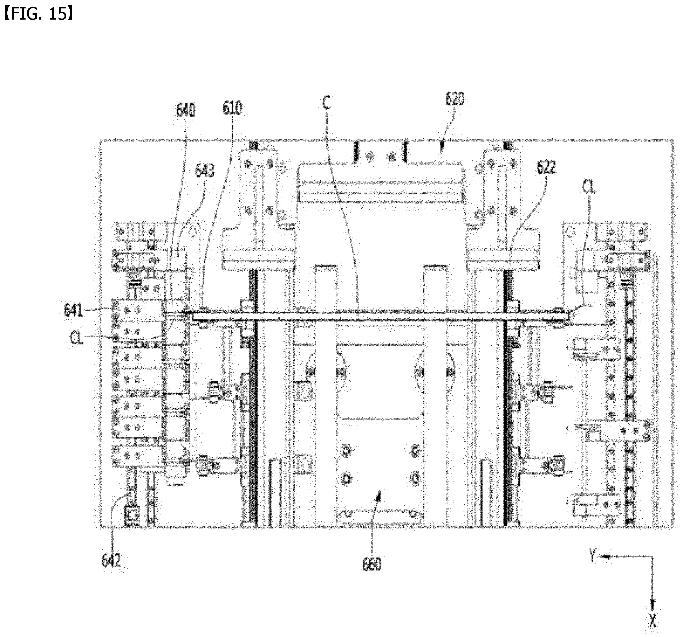

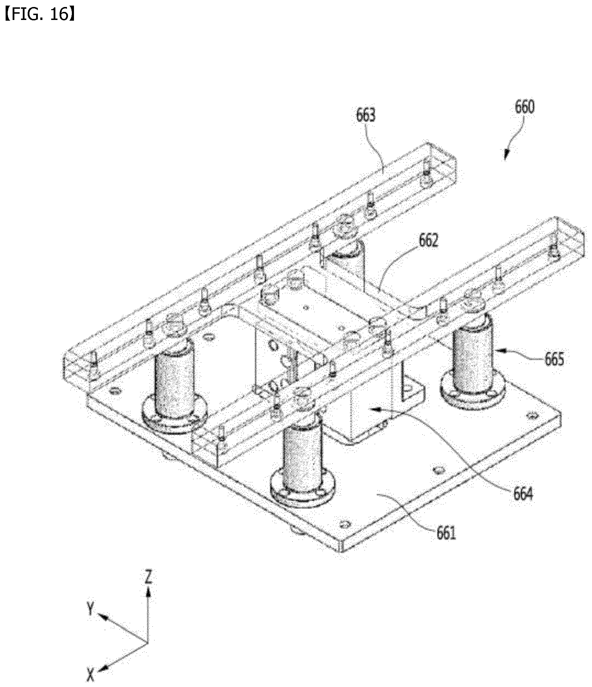

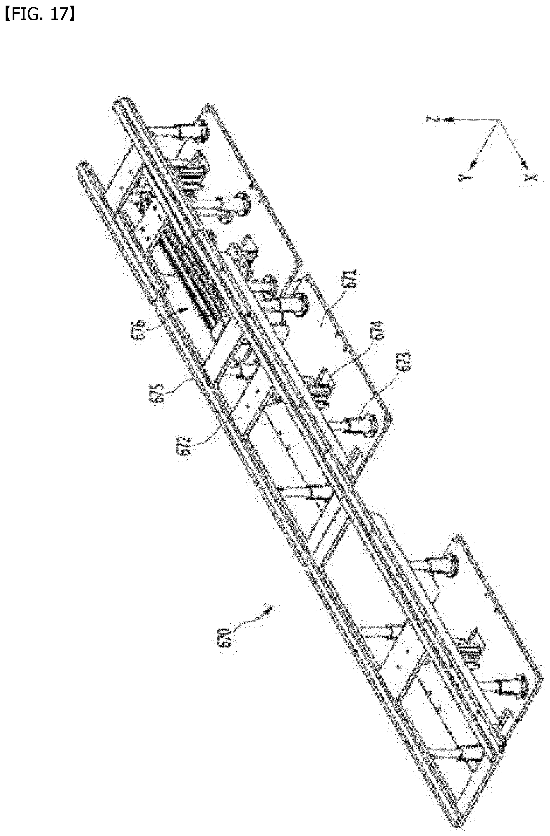

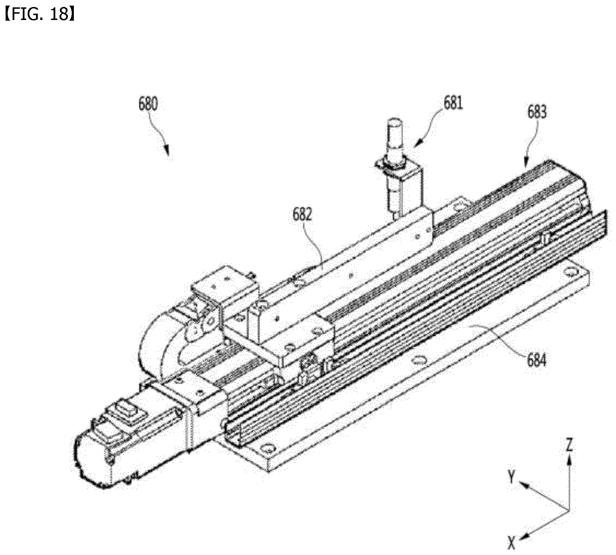

FIG. 14 is a diagram for explaining movement of a fork according to an embodiment of the present disclosure. FIG. 15 is a diagram for explaining movement of an insulating block according to an embodiment of the present disclosure. FIG. 16 is a perspective view of a raising and lowering mechanism according to an embodiment of the present disclosure. FIG. 17 is a perspective view of a return unit according to an embodiment of the present disclosure. FIG. 18 is a perspective view of a sensor unit according to an embodiment of the present disclosure.

The stacking unit 600 may be referred to as a cell stacking device.

The stacking unit 600 may include the plurality of forks 610 on which the cell C is vertically loaded, the stacking reference part 620 positioned at one side of the plurality of forks 610 based on the first direction x, the stacking pressurizing unit 630 positioned at an opposite side to the stacking reference part 620 based on the plurality of forks 610, and a stacking mechanism 650 for transferring the stacking pressurizing unit 630 toward the stacking reference part 620.

The fork 610 may be a jig. The fork 610 may be moved in the first direction x. The fork 610 may have a shape "U" opened upward. The plurality of forks 610 may be provided in two rows.

The fork 610 may support both ends of the cell C. In more detail, a pair of forks 610 spaced apart from each other in the second direction y among the plurality of forks 610 may support both ends of the cell C.

The cell C may be vertically loaded long in the fork 610 in the second direction y. In more detail, the second transfer unit 500 (refer to FIG. 10) may transfer the cell C in a vertical state and may load the cell C on the fork 610. An electrode lead (hereinafter "CL") of the cell C loaded on the fork 610 may protrude out of the fork 610.

As shown in FIG. 13, the plurality of cells C may be loaded on the plurality of forks 610 and may face each other based on the first direction x. In this state, when the stacking pressurizing unit 630 pressurizes the plurality of cells C toward the stacking reference part 620, the plurality of cells C may be stacked as a distance between the plurality of forks 610 is reduced. A material for adherence between the cells C is sprayed on each cell C by the spray unit 400 (refer to FIG. 9), and thus the plurality of cells C may be smoothly stacked.

Referring to FIG. 14, the stacking unit 600 may include a fork guide rail 613 for guiding movement of the fork 610 in the first direction x. In more detail, a vertical bar 611 may be connected to a lower end of each fork 610, and a moving body 612 moved in the first direction x along the fork guide rail 613 may be coupled to the vertical bar 611.

The fork guide rail 613 may extend long in the first direction x. The fork guide rail 613 may be coupled to a side surface of a fork support frame 614. The fork support frame 614 may be supported by a return unit 670 (refer to FIG. 17) to be described below.

The plurality of fork guide rails 613 may be positioned at different heights.

A pair of forks 610 next to each other may be connected to different fork guide rails 613. In more detail, the moving body 612 coupled to the vertical bars 611 next to each other may be connected to the fork guide rails 613 having different heights. Thus, interference between the moving bodies 612 may not occur, and thus the cells C may be easily stacked.

The plurality of vertical bars 611 may be connected to each other by a link 615. The link 615 may be a multi-link, but is not limited thereto. A distance between the plurality of forks 610 may be simultaneously varied by the link 615. Accordingly, the plurality of cells C may be uniformly stacked. A distance between the plurality of forks 610 may be simultaneously increased by the return unit 670 (refer to FIG. 17) to be described below.

Referring back to FIG. 12, the stacking reference part 620 and the stacking pressurizing unit 630 may be supported by a main support frame 601 and a leg 601a.

The stacking reference part 620 and the stacking pressurizing unit 630 may include horizontal panels 621 and 631, pressurizing bodies 622 and 632 that are disposed above the horizontal panels 621 and 631 and pressurize the cell C, and pressurizing mechanisms 623 and 633 for transferring the pressurizing bodies 622 and 632 in the first direction x.

The pressurizing bodies 622 and 632 may be directed toward the first direction x. The pressurizing body 622 of the stacking reference part 620 and the pressurizing body 632 of the stacking pressurizing unit 630 may face each other.

The pressurizing bodies 622 and 632 may face a part between the plurality of forks 610. When the plurality of cells C is stacked, the pressurizing bodies 622 and 632 may pressurize the cell C in the first direction x.

Each of the stacking reference part 620 and the stacking pressurizing unit 630 may include a plurality of pressurizing bodies 622 and 632. For example, each of the pressurizing bodies 622 and 632 of the stacking reference part 620 and the stacking pressurizing unit 630 may include a center body for pressurizing the center of the cell C and a pair of side bodies for pressurizing both ends of the cell C. However, the present disclosure is not limited thereto.

The pressurizing mechanisms 623 and 633 may include an actuator (e.g., a driving cylinder). The pressurizing mechanisms 623 and 633 may be installed on upper surfaces of the horizontal panels 621 and 631.

Each of the stacking reference part 620 and the stacking pressurizing unit 630 may include the plurality of pressurizing mechanisms 623 and 633. For example, each of the stacking reference part 620 and the stacking pressurizing unit 630 may include the three pressurizing mechanisms 623 and 633 for independently transferring the center body and the pair of side bodies.

The stacking mechanism 650 may transfer the stacking pressurizing unit 630 in the first direction x.

The stacking mechanism 650 may include an actuator 651 and a ball screw 652.

The actuator 651 may be a servo motor. The actuator 651 may be installed on and supported by the main support frame 601.

The ball screw 652 may be formed a long way in the first direction x. One end of the ball screw 652 may be connected to the actuator 651, and the other end may be connected to a screw support unit 653. The screw support unit 653 may be installed on a horizontal plate 661 of a raising and lowering mechanism 660 (refer to FIG. 16) to be described below.

A connection body 654 may be coupled to the stacking pressurizing unit 630, in more detail, a lower surface of the horizontal panel 631 of the stacking pressurizing unit 630, and the connection body 654 may be moved in the first direction x along with rotation of the ball screw 652. Thus, the stacking mechanism 650 may transfer the stacking pressurizing unit 630 in the first direction x.

The stacking unit 600 may include a guide rail 635 for guiding movement of the stacking pressurizing unit 630. The guide rail 635 may be disposed long in the first direction x above the main support frame 601.

A pair of guide rails 635 may be spaced apart from each other in parallel to the second direction y. A pair of guide bodies 634 may be coupled to the stacking pressurizing unit 630, in more detail, a lower surface of the horizontal panel 631 of the stacking pressurizing unit 630. The pair of guide bodies 634 may be positioned at opposite sides based on the connection body 654. The pair of guide bodies 634 may be moved in the first direction x with the stacking pressurizing unit 630 along the pair of guide rails 635.

The stacking unit 600 may further include a plurality of insulating blocks 640 for preventing short between leads CL of the plurality of cells C, an insulating block reference part 643 positioned at one side of the plurality of insulating blocks based on the first direction x, and an insulating block pressurizing unit 690 positioned at an opposite side of the insulating block reference part 643 based on the plurality of insulating blocks 640.

The insulating blocks 640 may be moved in the first direction x. The plurality of insulating blocks 640 arranged in two rows may be provided. The insulating blocks 640 may be positioned outside the fork 610.

Each of the insulating blocks 640 may be positioned between the lead CL of any one of the cells C and the lead CL of another cell C. Thus, the insulating blocks 640 may prevent short between the leads CL.

Referring to FIG. 15, the stacking unit 600 may include an insulating block guide rail 642 for guiding movement of the insulating blocks 640 with respect to the first direction x. In more detail, a coupling body 641 moved in the first direction x along the insulating block guide rail 642 may be coupled to each of the insulating blocks 640.

The insulating block guide rail 642 may extend a long way in the first direction x. The insulating block guide rail 642 may be coupled to an upper surface of an insulating block support frame 602 (refer to FIG. 12). That is, the plurality of insulating blocks 640 may be supported by the insulating block support frame 602 and a leg 602a.

The plurality of insulating block guide rails 642 spaced apart from each other in the second direction y may be provided.

The pair of insulating blocks 640 next to each other may be connected to different insulating block guide rails 642. In more detail, the coupling body 641 coupled to the insulating blocks 640 next to each other may be connected to each of the insulating block guide rails 642 that are spaced apart from each other.

Referring back to FIG. 12, the plurality of coupling bodies 641 may include a first type coupling body 641a connected to links 644, 645, and 646, and a second type coupling body 641b that is not connected to the links 644, 645, and 646.

The plurality of links 644, 645, and 646 may be a multi-link, but the present disclosure is not limited thereto. Distances between the plurality of insulating blocks 640 to which the first type coupling body 641a is coupled may be simultaneously varied by the links 644, 645, and 646.

The plurality of links 644, 645, and 646 may include a first link 644 for connecting the plurality of first type coupling bodies 641a to each other, a second link 645 for connecting one first type coupling body 641a and the insulating block pressurizing unit 690, and a third link 646 for connecting the other first type coupling body 641a and the insulating block reference part 643.

The insulating block reference part 643 may be fixed to the insulating block support frame 602. The insulating block reference part 643 may be disposed adjacently to the stacking reference part 620.

The insulating block pressurizing unit 690 may be connected to the stacking pressurizing unit 630. Thus, the insulating block pressurizing unit 690 may be moved with the stacking pressurizing unit 630 in the first direction x. A guide block 691 moved along an insulating block guide rail 642 (refer to FIG. 15) may be connected to the insulating block pressurizing unit 690. Thus, the insulating block pressurizing unit 690 may pressurize the plurality of insulating blocks 640 toward the insulating block reference part 643.

In more detail, the insulating block pressurizing unit 690 may include a pressurizing mechanism 690a and a pressurizing body 690b moved by the pressurizing mechanism 690a in the first direction x to pressurize the insulating blocks 640. The pressurizing mechanism 690a may include an actuator (e.g., a driving cylinder).

Thus, the insulating block pressurizing unit 690 may more reliably pressurize the insulating blocks 640.

The stacking unit 600 may further include the raising and lowering mechanism 660 for raising cell block CB (refer to FIG. 19) formed by stacking the plurality of cells C.

The raising and lowering mechanism 660 may be disposed more adjacently to the stacking reference part 620 among the stacking reference part 620 and the stacking pressurizing unit 630. The raising and lowering mechanism 660 may be positioned below the cell C loaded on the fork 610.

Referring to FIG. 16, the raising and lowering mechanism 660 may include the horizontal plate 661, a supporter 662 for supporting the cell block CB from a below, and a raising and lowering mechanism 664 for raising and lowering the supporter 662.

The horizontal plate 661 may be supported by the main support frame 601.

A supporter 663 may be positioned above the horizontal plate 661. The supporter 663 may be raised and lowered in a state of being connected to the horizontal plate 661 by a connection device 665. For example, the connection device 665 may include a bush coupled to an upper surface of the horizontal plate 661 and a shaft connected to a lower surface of the supporter 662 and inserted into the bush.

An accommodation unit 663 for accommodating the cell block CB therein may be installed on an upper surface of the supporter 663.

The raising and lowering mechanism 664 may include an actuator (e.g., a driving cylinder). The raising and lowering mechanism 664 may be installed on the upper surface of the horizontal plate 661. The raising and lowering mechanism 664 may be connected to the lower surface of the supporter 662 and may raise and lower the supporter 662 with respect to the horizontal plate 661.

The stacking unit 600 may further include the return unit 670 for returning the plurality of forks 610 to an original position when the cell block CB is unloaded from the supporter 662 of the raising and lowering mechanism 660.

Referring to FIG. 17, the return unit 670 may include a base plate 671, a raising and lowering frame 672 raised and lowered by the base plate 671, a first return mechanism 674 for raising and lowering the raising and lowering frame 672, and a second return mechanism 676 for moving the plurality of forks 610 in the first direction x.

The base plate 671 may be horizontally disposed. The base plate 671 may be integrally formed or may include a plurality of plates that are separated from each other.

The raising and lowering frame 672 may be positioned above the base plate 671. The raising and lowering frame 672 may be raised and lowered in a state of connected to the base plate 671 by a plurality of raising and lowering guides 673. For example, each of the raising and lowering guides 673 may include a bush connected to the upper surface of the base plate 671 and a shaft connected to the lower surface of the raising and lowering frame 672 and inserted into the bush.

The aforementioned fork support frame 614 (refer to FIG. 14) may be supported by the raising and lowering frame 672. That is, the fork support frame 614 and the fork 610 may be raised and lowered with the raising and lowering frame 672.

The first return mechanism 674 may be installed on the upper surface of the base plate 671 and may raise and lower the raising and lowering frame 672 from a lower side of the raising and lowering frame 672. The first return mechanism 674 may include an actuator (e.g., a driving cylinder). The plurality of first return mechanisms 674 may be provided and the entire portion of the raising and lowering frame 672 may be stably raised and lowered.

A second return mechanism 675 may be installed on the base plate. The second return mechanism 675 may be disposed a long way in the first direction x.

The second return mechanism 675 may be connected to the plurality of vertical bars 611 (refer to FIG. 14) by a connecting frame (not shown). The connecting frame may be connected to the second return mechanism 676 and may guide movement in the first direction x by the rail 675 that is disposed a long way in the first direction x on the upper surface of the raising and lowering frame 672. Thus, the second return mechanism 675 may move the plurality of forks 610 in the first direction x.

The second return mechanism 675 may include an actuator (e.g., a servo motr) and a power transfer device (e.g., a 1-axis Cartesian coordinate robot) for transferring power of the actuator to the connecting frame.

The stacking unit 600 may further include a sensor unit 680 for detecting the position of the fork 610. The sensor unit 680 may be positioned at a side of the return unit 670. The sensor unit 680 may be positioned below the fork 610 and the insulating blocks 640.

Referring to FIG. 18, the sensor unit 680 may include a sensor 681, a bracket 682 to which the sensor 681 is coupled, and a moving mechanism 683 for moving the bracket 682 in the first direction x. The sensor unit 680 may further include a mounting plate 684 on which the moving mechanism 683 is mounted.

The sensor 681 may be positioned below the fork 610. The sensor 681 may be moved with the bracket 682 in the first direction x. Thus, the sensor 681 may detect the position of the plurality of forks 610 that are arranged in a line in the first direction x.

The moving mechanism 683 may be mounted on the upper surface of the mounting plate 684 that is horizontally positioned. The moving mechanism 683 may include an actuator (e.g., a servo motor), and a connection mechanism (e.g., a 1-axis Cartesian coordinate robot) connected to a bracket 862.

FIG. 19 is a diagram for explaining an operation of a stacking unit according to an embodiment of the present disclosure.

Hereinafter, an operation of the stacking unit 600 will be described briefly.

As shown in FIG. 19A, the cell C may be loaded in a vertical state on each of the plurality of forks 610 that are spaced apart from each other in the first direction x.

Then, as shown in FIG. 19B, the stacking pressurizing unit 630 may be moved toward the stacking reference part 620, and the plurality of forks 610 and the plurality of cells C loaded thereon may be moved toward the stacking reference part 620. Thus, the plurality of cells C may be stacked between the stacking pressurizing unit 630 and the stacking reference part 620 to form the cell block CB.

Then, as shown in FIG. 19C, the raising and lowering mechanism 660 for supporting the cell block CB may be raised, and the third transfer unit 700 may transfer the cell block CB placed on the raising and lowering mechanism 660. The return unit 670 may lower the plurality of forks 610.

Then, as shown in FIG. 19D, the stacking pressurizing unit 630 may be moved in a direction away from the stacking reference part 620 and may return to an initial position. The return unit 670 may return the plurality of forks 610 at an original interval. Thus, the aforementioned process may be repeatedly performed.

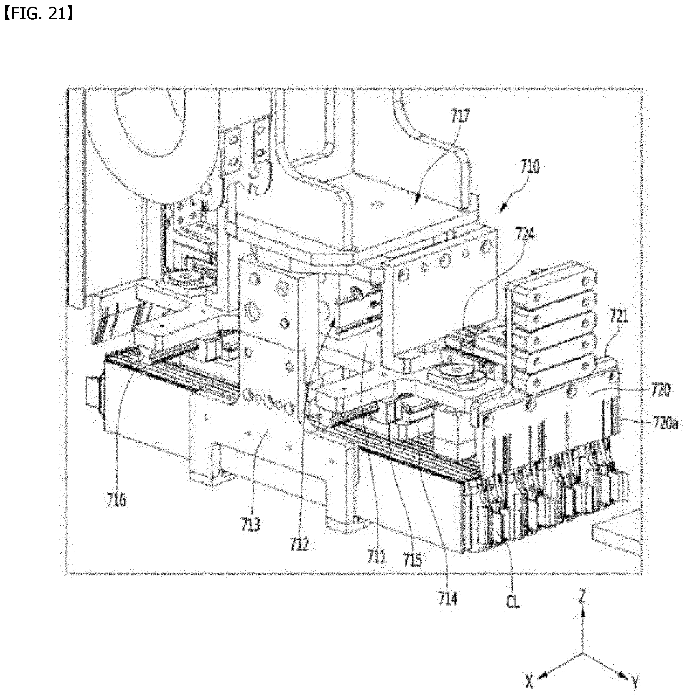

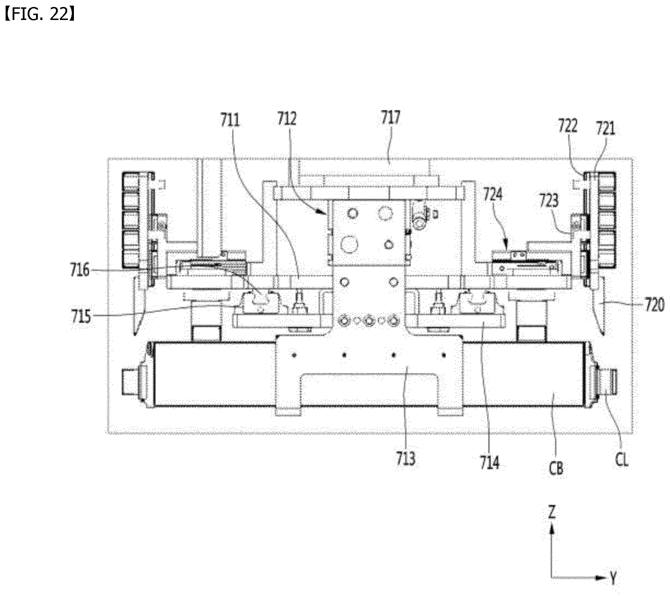

FIG. 20 is a perspective view of a third transfer unit according to an embodiment of the present disclosure. FIG. 21 is an enlarged view of a clamp shown in FIG. 20. FIG. 22 is a diagram of the clamp shown in FIG. 21 viewed in a horizontal direction.

The third transfer unit 700 may transfer the cell block CB placed on the raising and lowering mechanism 660 of the stacking unit 600 to the bus bar assembly unit 800.

The third transfer unit 700 may include a clamp 710, and moving mechanisms 730 and 740 for moving the clamp 710.

For example, the moving mechanisms 730 and 740 may be a 2-axis Cartesian coordinate robot.

In more detail, the moving mechanisms 730 and 740 may include a raising and lowering mechanism 730 for raising and lowering the clamp 710, and a horizontal moving mechanism 740 for moving the clamp 710 in the first direction x.

The raising and lowering mechanism 730 may include an actuator (e.g., a servo motor) and a connection mechanism (e.g., a z-axis Cartesian coordinate robot) that is connected to the clamp 710 and is formed a long way up and down.

The horizontal moving mechanism 740 may include an actuator (e.g., a servo motor) and a connection mechanism (e.g., an x-axis Cartesian coordinate robot) that is connected to the raising and lowering mechanism 730 and formed a long way in the first direction x. The horizontal moving mechanism 740 may be supported by a leg 742.

The clamp 710 may grip the cell block CB.

In more detail, the clamp 710 may include a horizontal panel 711, a pair of clamping bodies 713 positioned at both sides of the horizontal panel 711, and a clamping mechanism 712 for adjusting a distance between the pair of clamping bodies 713.

The horizontal panel 711 may be connected to the raising and lowering mechanism 730 by a connection frame 717.

The pair of clamping bodies 713 may protrude toward a lower side of the horizontal panel 711 and may be spaced apart from each other in the first direction x. Thus, both surfaces of the cell block CB positioned a long way in the second direction y may be gripped between the pair of clamping bodies 713. In this case, the cell block CB may be positioned below the horizontal panel 711.

A friction member for stably gripping the cell block CB rather than slipping may be provided on an opposite surface of each clamping body 713. A flange for preventing the cell block CB from falling down may be provided at a lower end of at least one lower of the pair of clamping bodies 713. The flange may be supported from the cell block CB from the below.

The clamping mechanism 712 may include an actuator (e.g., a driving cylinder). The clamping mechanism 712 may be connected to at least one of the pair of clamping bodies 713.

The clamp 710 may further include a lower panel 714 positioned below the horizontal panel 711, and auxiliary mechanisms 715 and 716 for moving the lower panel 714 in the first direction x with respect to the horizontal panel 711.

The lower panel 714 may be horizontally disposed below the horizontal panel 711. The pair of clamping bodies 713 may be protrude toward a lower side of the lower panel 714, and the cell block CB gripped by the pair of clamping bodies 713 may be positioned below the lower panel 714.

The auxiliary mechanisms 715 and 716 may be disposed between the lower panel 714 and the horizontal panel 711. Auxiliary mechanisms 714 and715 may move the horizontal panel 711, the clamping mechanism 712 installed thereon, and the pair of clamping bodies 713 in the first direction x with respect to the lower panel 714.

In more detail, the auxiliary mechanisms 715 and 716 may include an actuator (e.g., a driving cylinder), a guide rail 716 coupled to the lower surface of the horizontal panel 711 and formed a long way in the first direction x, and a slider 715 coupled to the upper surface of the lower panel 714 and moved along the guide rail 716.

The clamp 710 may further include an insulating body 720 that is moveable in upward and downward directions and prevents short between the plurality of leads CL of the cell block CB, and a position adjusting mechanism 724 for moving the insulating body 720 in the second direction y.

The pair of insulating bodies 720 spaced apart from each other in the second direction y may be provided. The pair of insulating bodies 720 may prevent short between the leads CL provided at both ends of the cell block CB.

A plurality of slots 720a into which the leads CL are inserted may be formed in the insulating body 720. When the insulating body 720 is lowered toward the leads CL due to self-load, the leads CL may be inserted into the slots 720.

The insulating body 720 may protrude toward a lower side of the horizontal panel 711. The insulating body 720 may be coupled to a lower side of a vertical plate 721 that protrudes upward compared with the horizontal panel 711. The vertical plate 721 may be raised and lowered with the insulating body 720.

The insulating body 720 may be installed idly to be moveable by external force. A connection body 723 connected to the position adjusting mechanism 724 to be described below in more detail may include a raising and lowering guide 723, and a vertical rail 722 guided upward and downward along the raising and lowering guide 723 may be provided on an internal surface of the vertical plate 721 to which the insulating body 720 is coupled.

When the clamp 710 is lowered to grip the cell block CB placed on the raising and lowering mechanism 660 (refer to FIG. 12) of a main unit 600, the insulating body 720 may be pressurized upward by the insulating blocks 640 of the main unit 600. When the clamp 710 is raised in a state of gripping the cell block CB, the insulating body 720 may be lowered by self-load to insert the leads CL of the cell block CB into the slots 720a of the insulating body 720.

The position adjusting mechanism 724 may installed on an upper surface of a horizontal plate 711. The position adjusting mechanism 724 may include an actuator (e.g., a driving cylinder). The position adjusting mechanism 724 may be connected to the vertical plate 721 by the connection body 723.

A pair of position adjusting mechanisms 724 for moving a pair of insulating bodies 720 in the second direction y may be provided. The pair of position adjusting mechanisms 724 may be mounted at a portion of the upper surface of the horizontal panel 711, which is adjacent to both ends.

Thus, the position of each insulating body 720 with respect to the second direction y may be variably adjusted depending on a position at which the cell block CB is gripped.

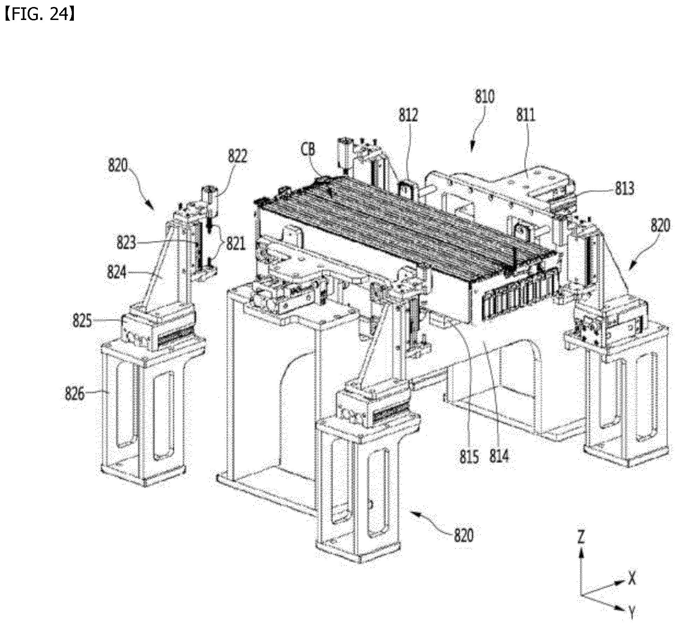

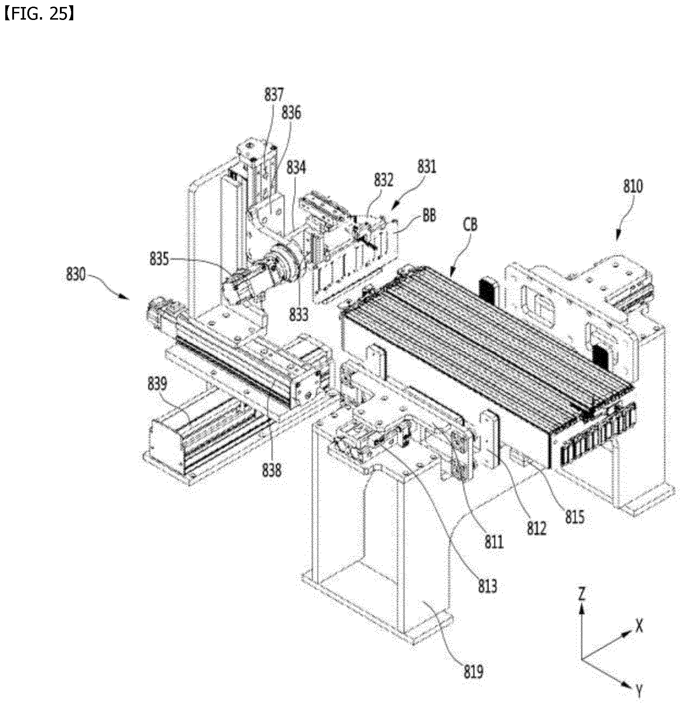

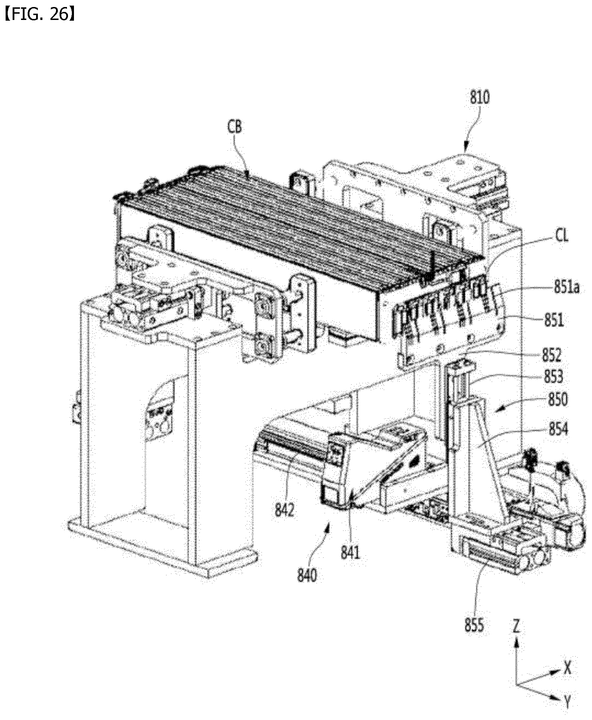

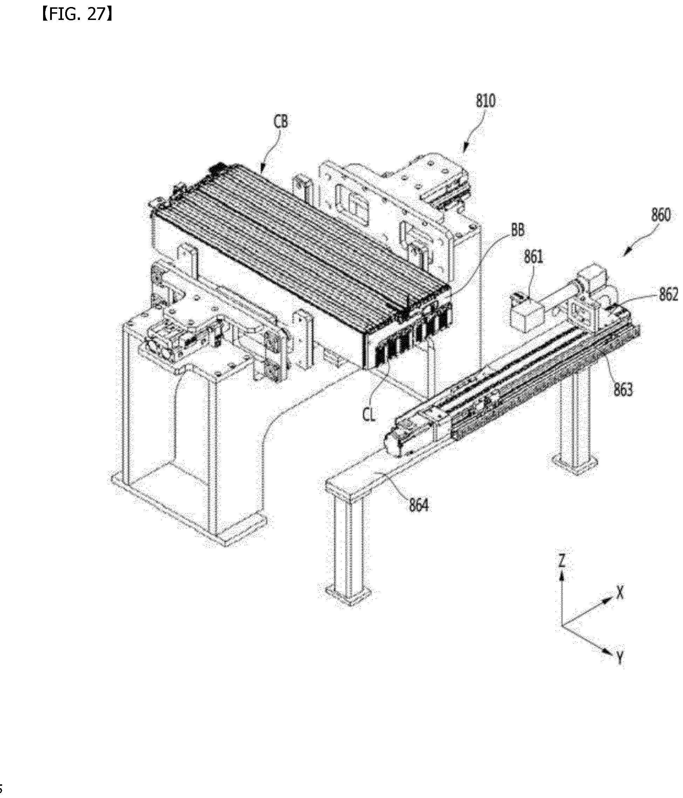

FIG. 23 is a perspective view of a bus bar assembly unit according to an embodiment of the present disclosure. FIG. 24 is a diagram for explaining a clamping unit and a sub clamping unit according to an embodiment of the present disclosure. FIG. 25 is a diagram for explaining a bus bar supply unit according to an embodiment of the present disclosure. FIG. 26 is a diagram for explaining a scanner and an insulating unit according to an embodiment of the present disclosure. FIG. 27 is a diagram for explaining an inspection unit according to an embodiment of the present disclosure.

The bus bar assembly unit 800 may assemble a bus bar BB (refer to FIG. 25) on the cell block CB transferred by the third transfer unit 700.

The bus bar assembly unit 800 may include a fixing unit 810 for fixing the cell block CB, a clamping unit 820 for clamping the bus bar BB assembled to the cell block CB, an assembly unit 830 for assembling the bus bar BB to the cell block CB, a scan unit 840 for measuring stacking tolerance of the cell block CB, and a vision unit 860 for inspecting whether the bus bar BB is appropriately assembly. The bus bar assembly unit 800 may further include an insulating unit 850 (refer to FIG. 26) for preventing short between the cell blocks CB.

Hereinafter, with reference to FIG. 24, the fixing unit 810 and the clamping unit 820 will be described in detail.

The fixing unit 810 may include a pair of fixing bodies 811 spaced apart from each other in the first direction x, a fixing mechanism 813 for moving the fixing bodies 811 in the first direction x, and a support unit 815 for supporting the cell block CB from the below.

The pair of fixing bodies 811 may face each other across the cell block CB. The cell block CB may be fixed between the pair of fixing bodies 811.

The fixing bodies 811 may include a vertical panel formed a long way in the second direction y and a connector that extends in an opposite direction of the cell block CB and is connected to the fixing mechanism 813 on the vertical panel.

A pressurizing unit 812 for pressurizing the cell block CB in contact with the cell block CB may be provided on the fixing bodies 811, in more detail, an internal surface of the vertical plate.

A pair of fixing mechanisms 813 for driving each of the pair of fixing bodies 811 in the first direction x may be provided. The pair of fixing mechanisms 813 may be spaced apart from each other in the first direction. The fixing mechanism 813 may include an actuator (e.g., a driving cylinder).

The support unit 815 may support the cell block CB from the below. The fixing mechanism 813 and the support unit 815 may be supported by a support frame 814.

The plurality of clamping units 820 spaced apart from each other may be provided. For example, two pairs of clamping units 820 may be provided. Any pair of the clamping units 820 may clamp both ends of the bus bar BB (refer to FIG. 25) assembled to one side of the cell block CB and the other pair of the clamping units 820 may clamp both ends of the bus bar BB assembled to the other side of the cell block CB.

The clamping unit 820 may include a pair of vertical pins 821 that are spaced apart from each other upward and downward, a clamping mechanism 823 for adjusting a vertical distance between the pair of vertical pins 821, and a horizontal moving mechanism 825 for moving the pair of vertical pins 821 in the first direction x.

The pair of vertical pins 821 may be placed in a straight line. The vertical pins 821 may be inserted into a pin-hole formed in the bus bar BB and may clamp the bus bar BB.

The pair of vertical pins 821 may be connected to a pair of pin connection bodies 822 spaced apart from each other up and down. The vertical pin 821 positioned at an upper side among the pair of vertical pins 821 may protrude toward a lower side of one pin connection body 822, and the vertical pin 821 positioned at a lower side among the pair of vertical pins 821 may protrude toward an upper side of the other pin connection body 822.

The clamping mechanism 823 may adjust a vertical distance between the pair of pin connection bodies 822. The clamping mechanism 823 may be disposed a long way up and down and may be connected to one pair of pin connection bodies 822. The clamping mechanism 823 may include an actuator (e.g., a driving cylinder).

The clamping mechanism 823 may be connected to the horizontal moving mechanism 825 by a connection frame 824.

The horizontal moving mechanism 825 may move the clamping mechanism 823 and the vertical pin 821 and the pin connection body 822 that are connected thereto in the first direction x. The horizontal moving mechanism 825 may be disposed a long way in the first direction x. The horizontal moving mechanism 825 may include an actuator (e.g., a driving cylinder). The horizontal moving mechanism 825 may be supported by a support frame 826.

Thus, it may be possible to adjust the position of the vertical pin 821 of each clamping unit 820 depending on the positions of the cell block CB fixed to the fixing unit 810 and the bus bar BB assembled thereto.

Hereinafter, with reference to FIG. 25, the assembly unit 830 will be described in detail.

The pair of assembly units 830 positioned at both sides of the cell block CB may be provided. That is, the pair of assembly units 830 may be spaced apart in a second direction and may face each other (refer to FIG. 23). The pair of assembly units 830 may each assemble the bus bar BB at both ends of the cell block CB fixed to the fixing unit 810.

The assembly unit 830 may include a clamp 831 for clamping the bus bar BB, a rotation mechanism 835 for rotating the clamp 831 around a rotation shaft of the first direction x, and moving mechanisms 837, 838, and 839 for moving the clamp 831.

The moving mechanisms 837, 838, and 839 may each be a 3-axis Cartesian coordinate robot.

In more detail, the moving mechanisms 837, 838, and 839 may include a raising and lowering mechanism 837 for raising and lowering the clamp 831, a first moving mechanism 838 for moving the clamp 831 in the second direction y, and a second moving mechanism 839 for moving the clamp 831 in the first direction x.

The raising and lowering mechanism 837 may include an actuator (e.g., a servo motor) and a connection mechanism (e.g., a z-axis Cartesian coordinate robot) formed a long way up and down. The raising and lowering mechanism 837 may be connected to the clamp 831 by a bending frame 836 having a shape "L".

The first moving mechanism 838 may include an actuator (e.g., a servo motor) and a connection mechanism (e.g., a y-axis Cartesian coordinate robot) connected to the raising and lowering mechanism 837 and formed a long way in the second direction y.

The second moving mechanism 839 may include an actuator (e.g., a servo motor) and a connection mechanism (e.g., a x-axis Cartesian coordinate robot) connected to the first moving mechanism 838.

The rotation mechanism 835 may include an actuator (e.g., a rotation motor). The rotation mechanism 835 may be connected to the clamp 831 through the bending frame 836. Thus, the rotation mechanism 835 may be moved with the clamp 831. An angle between the clamp 831 and the bus bar BB gripped thereby may be adjusted by the rotation mechanism 835.

The clamp 831 may grip the bus bar BB vertically. The bus bar BB may be formed a long way in the first direction x and may be assembled to both ends of the cell block CB.

In more detail, the clamp 831 may include a pair of clamping bodies 832 spaced apart from each other up and down, a clamping mechanism 833 for adjusting a vertical distance between the pair of clamping bodies 832, and a connector 834 connected to the rotation mechanism 835 and supported by the bending frame 836.

The bus bar BB may be gripped between the pair of clamping bodies 832. The clamping mechanism 833 may grip or release the bus bar BB by adjusting a distance between the pair of clamping bodies 832. The clamping mechanism 833 may include an actuator (e.g., a driving cylinder).

Hereinafter, the scan unit 840 and the insulating unit 850 will be described in detail with referenced to FIG. 26.

The scan unit 840 may be positioned below the fixing unit 810. The scan unit 840 may measure a stacking tolerance in the first direction x as a full width direction of the cell block CB fixed to the fixing unit 810.

The scan unit 840 may include a scanner 841 and a scan mechanism 842 for moving the scanner 841 in the second direction y.

The scanner 841 may be a 3D scanner but is not limited thereto. The scanner 841 may be disposed upward to scan a lower surface of the cell block CB.

The scan mechanism 842 may move the scanner 841 in the second direction y. Thus, the scanner 841 may measure a stacking tolerance in a full length direction (second direction) of the cell block CB. The scan mechanism 842 may include an actuator (e.g., a servo motor) and a connection mechanism (e.g., a 1-axis Cartesian coordinate robot) connected to the scanner 841 and formed a long way in the second direction.

The pair of insulating units 850 positioned at both sides of the cell block CB may be provided. That is, the pair of insulating units 850 may be spaced apart from each other in the second direction and may face each other. For convenience, FIG. 26 illustrates only one insulating unit 850.

The pair of insulating units 850 may prevent short between a plurality of leads CL provided at both ends of the cell block CB fixed to the fixing unit 810.

In more detail, the insulating unit 850 may include an insulating body 851 in which the plurality of slots 720a with the leads CL inserted thereinto is formed, a raising and lowering mechanism 853 for raising and lowering an insulating body 851, and a horizontal moving mechanism 855 for moving the insulating body 851 in the second direction y.

When the insulating body 851 is raised from a lower side of the leads CL, the leads CL may be inserted into slots 851a. When the bus bar BB is assembled, the insulating body 851 may be lowered. Accordingly, the bus bar BB may be easily assembled to both ends of the cell block CB.

The insulating body 851 may be coupled to an upper portion of a coupling body 852 that is vertically disposed. The insulating body 851 may be raised and lowered with the coupling body 852.

The raising and lowering mechanism 853 may be connected to the coupling body 852. The raising and lowering mechanism 853 may include an actuator (e.g., a driving cylinder).

The raising and lowering mechanism 853 may be connected to the horizontal moving mechanism 855 by a connection frame 854. The horizontal moving mechanism 855 may include an actuator (e.g., a driving cylinder).

Hereinafter, a vision unit 860 will be described in detail with reference to FIG. 27.

A pair of vision units 860 positioned at both sides of the cell block CB may be provided. That is, the pair of vision units 860 may be spaced apart from each other in the second direction y and may face each other. For convenience, FIG. 27 illustrates only one vision unit 860.

The pair of vision units 860 may detect whether the leads CL are normally inserted between the bus bar BB after the bus bar BB is assembled to the cell block CB fixed to the fixing unit 810.

In more detail, the vision unit 860 may include a vision sensor 861 and a moving mechanism 863 for moving the vision sensor 861 in the first direction x.

The vision sensor 861 may face the bus bar BB assembled to both ends of the cell block CB. The vision sensor 861 may be connected to the moving mechanism 863 by a connection frame 862.

The moving mechanism 863 may be supported by a supporter 864. That is, the supporter 864 may support the moving mechanism 863 to maintain the vision sensor 861 at a height corresponding to the cell block CB.

The moving mechanism 863 may include an actuator (e.g., a servo motor) and a connection mechanism (e.g., a 1-axis Cartesian coordinate robot) connected to the connection frame 862 and formed a long way in the first direction.

Thus, the vision sensor 861 may inspect the states of the plurality of leads CL and the bus bar BB in the first direction x that is the full width direction of the cell block CB.

The above description is merely illustrative of the technical spirit of the present disclosure, and various modifications and variations will be possible without departing from the essential features of the present disclosure by those skilled in the art to which the present disclosure pertains.

Therefore, the embodiments disclosed in the present disclosure are not intended to limit the technical spirit of the present disclosure, but to explain, and the scope of the technical spirit of the present disclosure is not limited by these embodiments.

The scope of the present disclosure should be interpreted by the following claims, and all technical ideas within the scope equivalent thereto should be construed as being included in the scope of the present disclosure.

## Claims

1. A secondary battery cell stacking device comprising:
a plurality of forks for supporting both ends of each of a plurality of cells to vertically load the cells and arranged in a row in a first direction, the first direction being horizontal;
a fork guide rail formed a long way in the first direction to guide the plurality of forks to be moved in the first direction;
a stacking reference part positioned at one side of the plurality of forks in the first direction;
a stacking pressurizing unit positioned at the other side of the plurality of forks in the first direction; and
a stacking mechanism for moving the stacking pressurizing unit toward the stacking reference part.

2. The secondary battery cell stacking device of claim 1, further comprising:
a plurality of insulating blocks positioned between leads of the plurality of cells to prevent short between the leads and arranged in a row in the first direction;
an insulating block guide rail formed a long way to guide the plurality of insulating blocks to be moved in the first direction;
an insulating block reference part positioned at one side of the plurality of insulating blocks in the first direction; and
an insulating block pressurizing unit moved with the stacking pressurizing unit to pressurize the insulating block toward the insulating block reference part.

3. The secondary battery cell stacking device of claim 2, wherein the insulating block pressurizing unit includes:
a pressurizing body for pressurizing the insulating block; and
a pressurizing mechanism for moving the pressurizing body in the first direction.

4. The secondary battery cell stacking device of claim 1, further comprising:
a supporter for supporting a cell block formed by stacking the plurality of cells, the supporter being under the cell block,; and
a raising and lowering mechanism for raising the supporter.

5. The secondary battery cell stacking device of claim 4, further comprising:
a return unit for returning the plurality of forks to an original position if the cell block is unloaded from the supporter.

6. The secondary battery cell stacking device of claim 5, wherein the return unit includes:
a first return mechanism for raising and lowering the fork guide rail and the plurality of forks; and
a second return mechanism for moving the plurality of forks in the first direction.

7. The secondary battery cell stacking device of claim 1, further comprising:
a link for connecting the plurality of forks to simultaneously vary intervals between the plurality of forks.

8. The secondary battery cell stacking device of claim 1, wherein:
the plurality of fork guide rails are positioned at different heights; and
a pair of forks next to each other is connected to different fork guide rails.

9. The secondary battery cell stacking device of claim 2, wherein:
the plurality of insulating block guide rails is spaced apart from each other in a second direction orthogonal to the first direction, the second direction is horizontal; and
a pair of insulating blocks next to each other is connected to different insulating block guide rails.

10. The secondary battery cell stacking device of claim 1, wherein the stacking reference part and the stacking pressurizing unit include:
a pressurizing body for pressurizing the cell accommodated on the fork; and
a pressurizing mechanism for moving the pressurizing body in the first direction.

11. A manufacturing system of a secondary battery, comprising:
a turn unit for vertically rotating a horizontally accommodated cell;
a transfer unit for transferring the cell rotated by the turn unit in a vertical state; and
a stacking unit for stacking a plurality of cells, transferred by the transfer unit and positioned vertically, in a first direction, the first direction being horizontal,
wherein the stacking unit includes:
a plurality of forks for supporting both ends of each of a plurality of cells to vertically load the cells;
a fork guide rail formed a long way in the first direction to guide the plurality of forks to be moved in the first direction;
a stacking reference part positioned at one side of the plurality of forks in the first direction;
a stacking pressurizing unit positioned at the other side of the plurality of forks in the first direction; and
a stacking mechanism for moving the stacking pressurizing unit toward the stacking reference part.

12. The manufacturing system of the secondary battery of claim 11, wherein the turn unit includes:
a rotation jig at which the cell is accommodated in a horizontal state;
an adsorption pad provided on the rotation jig and on which the cell is adsorbed; and
a rotation mechanism for vertically rotating the rotation jig.

13. The manufacturing system of the secondary battery of claim 12, further comprising:
a shuttle for accommodating the cell at the rotation jig,
wherein the shuttle includes:
a stage on which the cell is horizontally accommodated;
a raising and lowering mechanism for raising and lowering the stage; and
a moving mechanism for moving the raising and lowering mechanism and the stage in the first direction.

14. The manufacturing system of the secondary battery of claim 12, further comprising:
an align mechanism for aligning the cell accommodated at the rotation jig,
wherein the align mechanism includes:
a first align mechanism for aligning the cell in the first direction; and
a second align mechanism for aligning the cell in a second direction orthogonal to the first direction, the second direction being horizontal.

15. The manufacturing system of the secondary battery of claim 14, wherein the align mechanism further includes an align moving mechanism for moving the second align mechanism in the first direction.

16. The manufacturing system of the secondary battery of claim 11, further comprising:
a cell block transfer unit for transferring a cell block formed by stacking the plurality of cells by the stacking unit,
wherein the cell block transfer unit includes:
a clamp for gripping the cell block in a full width direction of the cell block;
an insulating body for preventing short between leads of the cell block gripped by the clamp and moveable upward and downward; and
a position adjusting mechanism for adjusting a position of the insulating body in a full width direction of the cell block.

17. The manufacturing system of the secondary battery of claim 13, further comprising:
an accommodation jig at which the cell is horizontally accommodated; and
a spraying unit for spraying an adhesive material for stacking to an upper surface of the cell accommodated at the accommodation jig,
wherein the shuttle moves the cell to which the adhesive material is sprayed to the rotation jig from the accommodation jig.
